(19) Europäisches Patentamt
European Patent Office
Office européen des brevets

(11) Veröffentlichungsnummer : **0 058 240**
**B1**

(12) # EUROPÄISCHE PATENTSCHRIFT

(45) Veröffentlichungstag der Patentschrift : **15.05.85**

(51) Int. Cl.⁴ : **A 22 C 13/00**

(21) Anmeldenummer : **81109119.8**

(22) Anmeldetag : **28.10.81**

(54) **Für Lebensmittel, insbesondere Wurstwaren, geeignete rauchdurchlässige Schlauchhülle mit einer Klebenaht und Verfahren zu ihrer Herstellung.**

(30) Priorität : **17.02.81 DE 3105718**

(43) Veröffentlichungstag der Anmeldung : **25.08.82 Patentblatt 82/34**

(45) Bekanntmachung des Hinweises auf die Patenterteilung : **15.05.85 Patentblatt 85/20**

(84) Benannte Vertragsstaaten : **AT BE CH DE FR GB IT LI LU NL SE**

(56) Entgegenhaltungen :
**EP-A- 0 014 346**
**EP-A- 0 037 543**
**EP-A- 0 054 162**
**FR-A- 2 336 884**
**US-A- 2 000 835**
**US-A- 2 181 887**

(73) Patentinhaber : **HOECHST AKTIENGESELLSCHAFT**
**Postfach 80 03 20**
**D-6230 Frankfurt am Main 80 (DE)**

(72) Erfinder : **Klenk, Ludwig**
**Jungferweg 20**
**D-6227 Oestrich Winkel III (DE)**
Erfinder : **Porrmann, Herbert, Dr.**
**Imkerweg 10**
**D-6272 Niedernhausen (DE)**
Erfinder : **Seifried, Walter, Dr.**
**Am Güldenplan 9**
**D-6200 Wiesbaden (DE)**
Erfinder : **Stenger, Karl**
**Theodor-Heuss-Strasse 27**
**D-6220 Rüdesheim (DE)**

**EP 0 058 240 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine Schlauchhülle von der im Oberbegriff des Anspruchs 1 genannten Art und auf ein Verfahren zu ihrer Herstellung der im Oberbegriff des Anspruchs 19 angegebenen Gattung.

Die EP-A-0 037 543 und EP-A-0 054 162 sind Stand der Technik im Sinne von Art. 54 (3) EPÜ. Sie betreffen Schlauchhüllen mit einer Klebenaht und ihre Herstellung. Die erste Schrift enthält keine Angaben über spezielle Festigkeitswerte des Hüllenmaterials und gibt auch keine Verfahrensmaßnahmen an, um diese Eigenschaften zu erreichen. Die zweite Schrift beschreibt eine Schlauchhülle, die rauchundurchlässig ist. Infolgedessen sind Verfahrensschritte zur Verbesserung der Rauchdurchlässigkeit der Klebstoffschicht nicht vorgesehen.

Schlauchhüllen aus einer Bahn, beispielsweise aus regenerierter Cellulose, die durch längsaxiales Falten und Verkleben der sich überlappenden längsaxial sich erstreckenden Randzonen hergestellt sind, sind bereits bekannt (US-A-2 148 884, US-A-2 226 442, US-A-2 685 769, US-A-2 685 770, US-A-2 686 725, US-A-2 757 495, US-A-2 773 773). Bei den bisher beschriebenen Verklebungen handelt es sich entweder um die Anwendung von Lösungsmitteln, mit denen die Oberfläche der Bahn angelöst und klebrig gemacht wird, wobei ein « Klebstoff » in situ auf der Bahnoberfläche erzeugt wird, oder um Bahnen, die mit einem thermoplastischen Harz überzogen sind oder aus einem thermoplastischen Material bestehen, das bei Anwendung von Wärme und Druck siegelfähig ist.

So beschreibt die US-A-2 653 432 ein Verfahren zum Verbinden der überlappenden Ränder eines Films, der beispielsweise auch aus regenerierter Cellulose bestehen kann und gegebenenfalls eine Faserverstärkung aufweist, mit einem Streifen aus thermoplastischem Material, der zwischen den sich überlappenden Rändern angeordnet ist und der beim Erhitzen klebrig wird. Als Beispiel für dieses thermoplastische Material wird u. a. Acrylsäureester und Polyvinylidenchlorid genannt. Diese bekannte Schlauchhülle kann auch einen feuchtigkeitsdichten Überzug auf der Außenseite aufweisen, wobei dann die überlappenden Ränder frei von dem Überzug und die restliche Oberfläche frei von thermoplastischem Material gehalten wird. Das Hüllenmaterial kann vorgestreckt sein, vorzugsweise in Längsrichtung.

Dieses bekannte, etwa 30 Jahre alte Verfahren, wird kaum mehr ausgeübt ; insbesondere ist ein Überlappungsnaht gebildet durch Versiegeln der übereinanderliegenden Randzonen, nicht ausreichend fest und auch aus optischen Gründen völlig unbefriedigend. Ferner können diese bekannten Schlauchhüllen nur relativ umständlich hergestellt werden, nämlich bei hohen Temperaturen, bei langen Verweilzeiten bis zum Abbinden des Klebstoffs und zum Teil unter Zuhilfenahme von Säuren oder organischen Lösungsmitteln, die nur schwer und mit sehr aufwendigen Maßnahmen aus der Schlauchhülle entfernt werden können.

Für Würste, die eine rauch- und gasdurchlässige Schlauchhülle besitzen müssen, sind die bekannten Schläuche mit einer Klebenaht nicht geeignet, da der Nahtbereich nicht ausreichend durchlässig ist.

Wursthüllen werden inzwischen überwiegend aus nahtlosem Material hergestellt, obwohl bei diesen nahtlosen Schläuchen einige Nachteile akzeptiert werden müssen ; insbesondere ist dieses Verfahren sehr kostenintensiv.

Nahtlose Schläuche aus faserverstärkter regenerierter Cellulose werden üblicherweise nach forgenden wesentlichen Verfahrensschritten hergestellt. Eine Faservliesbahn wird zu einem Schlauch geformt, dessen Ränder sich überlappen und mit Viskose verklebt werden. Nach ein- oder beidseitiger Beschichtung mit Viskose aus Ringschlitzdüsen wird der Schlauch koaguliert, zu Cellulosehydrat-Gel regeneriert und getrocknet. Während dieses Prozesses wird der Schlauch durch das bei der Koagulation und Regenerierung entstehende Gasgemisch und während des Trocknens durch ein eingebrachtes eingeschlossenes Luftvolumen abgestützt und gegebenenfalls zur Verbesserung der mechanischen Eigenschaften in Längs- und Querrichtung gestreckt.

Nachteiligerweise treten beispielsweise an den Kanten des flachgelegten Gelschlauchs längsaxial im Kantenbereich sich erstreckende Schwächungszonen, sogenannte Spinnkanten, auf. Ferner zeigt auch das Streckverfahren Nachteile.

Sowohl der Innendruck der Prozeßgase als auch der Innendruck beim Trocknen kann nicht präzise genug gesteuert werden, so daß der Durchmesser der Schläuche innerhalb enger Grenzen nicht konstant gehalten werden kann. Ferner ist es von Nachteil, daß beim Strecken von Schläuchen mit einem Spreizgas das Verhältnis der in tangentialer und radialer Richtung wirksamen Streckkräfte festgelegt ist, so daß der nahtlose Schlauch auch aus diesem Grund bezüglich seiner mechanischen Eigenschaften, insbesondere bezüglich der Schrumpfeigenschaften und der Festigkeit in Längs- und Querrichtung festgelegt ist.

Ausgehend von diesem Stand der Technik ist es deshalb Aufgabe der Erfindung, eine faserverstärke Schlauchhülle aus regenerierter Cellulose vorzuschlagen, die diese Nachteile der nahtlosen Schlauchhülle nicht aufweist, die vielmehr optimale mechanische Eigenschaften, insbesondere Schrumpf- und Festigkeitswerte, besitzt. Die Schlauchhülle und insbesondere die Verklebungsnaht muß relativ hohen mechanischen und thermischen Belastungen, z. B. Dehnungsbelastungen und der Einwirkung von heißem Wasser, standhalten und den Geschmack und das Aussehen des Lebensmittels nicht beeinträchtigen.

Eine besonders wesentliche Aufgabe besteht darin, eine Hülle zu schaffen, die im Verklebungsbereich ausreichend gas- und rauchdurchlässig ist, bei gleichzeitig großer Reißfestigkeit. Eine solche Hülle ist für Nahrungsmittel, die geräuchert werden sollen, z. B. für spezielle Brühwürste oder Dauerwurstwaren, deren Hülle gegebenenfalls auch abschälbar sein muß, oder für bestimmte Käsearten vorgesehen.

Eine zusätzliche Aufgabe der vorliegenden Erfindung besteht darin, eine Schlauchhülle aus regenerierter Cellulose vorzuschlagen, die eine Faserverstärkung aufweist und die auf einfachere Weise aus einer Bahn hergestellt werden kann, nämlich bei normalen Raumtemperaturen, kürzeren Verweilzeiten und ohne Zuhilfenahme von Säuren und zusätzlichen Lösungmitteln.

Eine Aufgabe der Erfindung besteht auch darin, eine gerade, im wesentlichen krümmungsfreie und faltenfreie Hülle mit einer Naht zu schaffen, die auch unter Einwirkung von Wasser und beim Schrumpfen ihre krümmungsfreie unf faltenfreie Form auch im Nahtbereich beibehält, trotz der relativ großen Hüllendicke in diesem Bereich. Schließlich ist es auch Aufgabe der Erfindung, eine öffnungshilfe vorzusehen, die ein leichteres und hygienisches Entfernen der Hülle vom Inhalt gestattet, ohne daß Schwachstellen an der Schlauchhülle vorgesehen werden müssen.

Diese Aufgabe wird überraschenderweise gelöst mit der im Anspruch 1 genannten Schlauchhülle. Die Ansprüche 2 bis 17 geben weitere Ausführungsformer der Schlauchhülle an. Die Aufgabe wird ferner gelöst durch ein Verfahren zur Herstellung der Schlauchhülle mit den im Anspruch 18 genannten Merkmalen. Die Ansprüche 19 bis 26 beschreiben weitere Ausbildungen des Verfahrens.

Vor allem aber zeigt diese Hülle überraschenderweise den Vorteil, daß sie bei der Einwirkung von Wärme und Wasser, wie dies beispielsweise beim Brühen und anschließendem Abkühlen von Wursthüllen geschieht, ihre gerade, krümmungsfreie Form beibehält. Dies ist besonders überraschend und nicht vorhersehbar, denn es ist ansich zu erwarten, daß sich die Hülle bei Einwirkung von Wärme und Wasser aufgrund der verschiedenen Wandstärken im Nahtbereich einerseits und im übrigen Bereich andererseits und der daraus zu erwartenden unterschiedlichen Werte für die Festigkeit, das Wasseraufnahme- und Wasserrückhaltevermögen krümmt oder ungleichmäßig ausdehnt oder schrumpft und sogar zum Platzen neigt.

Die Bildung einer Schlauchhülle mit einer oder mehreren längsaxial sich erstreckenden Nähten durch Verklebung der Randbereiche der längsaxial sich erstreckenden Ranzonen ist an sich bekannt, wozu auf die eingangs aufgeführten US-Patentschriften verwiesen wird.

Entsprechend der vorliegenden Erfindung wird ein um seine Längsachse gebogener, blatt- oder bahnförmiger rechteckiger Folienzuschnitt oder eine entsprechend gebogene, z. B. endlose Folienbahn durch Überlappung und Verklebung der längsaxial sich erstreckenden Randbereiche in eine Schlauchhülle mit einer längsaxial sich erstreckenden Verbindungsnaht übergeführt. Der Einfachheit halber wird im folgenden anstelle von « blatt- oder bahnförmigen Zuschnitten » und « endlosen Bahnen » nur von Bahnen gesprochen. Die Klebstoff enthaltende Schicht im Überlappungsbereich kann die Form eines Bandes, Fadens oder Streifens aufweisen. Es ist auch möglich, die Randzonen in der Weise miteinander zu verbinden, daß die Ränder bündig, d. h. mit den Kanten zumindest im wesentlichen aneinanderstoßend einander genähert werden und dann mit einem Klebstoff mit einem Band, Film- bzw. Folienstreifen, im folgenden als Folienstreifen bezeichnet, der beide Randzonen überdeckt, miteinander verbunden werden. Der Folienstreifen befindet sich dann auf der Außenseite oder Innenseite der Schlauchhülle, oder es werden parallel zueinander verlaufende Folienstreifen verwendet, von denen sich dann einer auf der Innenseite und einer auf der Außenseite der Schlauchhülle befindet. Ein Folienstreifen kann auch verwendet werden, wenn die Randzonen sich überlappen. Die Klebstoffschicht befindet sich vor der Herstellung der Verbindungsnaht auf den Randzonen der Bahn, vorzugsweise auf der Oberfläche des Folienstreifens.

Der Folienstreifen hat zweckmäßigerweise eine Breite von 5 bis 15 % des Schlauchumfangs und besteht vorzugsweise aus dem gleichen Material wie die Schlauchhülle, d. h. aus rauchdurchlässigem faserverstärktem Cellulosehydrat, wobei dessen Festigkeitswerte in Längs- und Querrichtung im gleichen Bereich liegen. Sofern jedoch auf die krümmungsfreie Form der Schlauchhülle kein besonderer Wert gelegt wird, ist es auch möglich, einen perforierten, genadelten oder gelochten Folienstreifen aus Papier oder aus streckorientierter Kunststoffolie wie Polyester-, Vinylidenchlorid-Copolymerisat, Polyvinylchlorid- oder Polypropylen-Folie oder einen Folienverbund aus zwei oder mehr Folien, z. B. mit einer Aluminiumfolie, oder einen rauchdurchlässigen Vliesstoff, z. B. einen adhäsiv, mechanisch oder thermisch verfestigten Faservliesstoff aus wirr oder geordnet abgelegten Spinnfasern, Filamenten oder multiplen Filamentgarnen aus synthetischem oder nativem Material, oder eine rauchdurchlässige Schaumfolie mit offenporiger oder geschlossenporiger Schaumstruktur, z. B. aus Polyurethan oder Polystyrol, zu verwenden.

Auch rauchdurchlässige mikroporöse Folien sind geeignet, worunter auch Membranen mit einem Porendurchmesser zu verstehen sind, wie sie beispielsweise Membranen besitzen, die bei der Reversosmose, Ultrafiltration, Dialyse oder Hämofiltration oder als Batterien- oder Brennstoffzellen-Diaphragmen eingesetzt werden.

Ebenso sind Bänder aus engmaschigem Gewebe, Netzwerk oder Gitter, die z. B. aus Fäden in Kette und Schuß gewebt sind, als rauchdurchlässige Folienstreifen zur Verbindung der Randzonen geeignet. Es ist somit wesentlich, daß der Folienstreifen aufgrunde seiner Struktur oder chemischen Zusammensetzung fähig ist, den Räucherrauch durch die Verbindungsnaht der Schlauchhülle durchtreten zu lassen.

Vorzugsweise werden jedoch kompakte Folienstreifen aus rauchdurchlässigem Material, insbesondere der oben genannte Folienstreifen aus Celluloseregenerat mit Faserverstärkung, verwendet, wobei dann eine zusätzliche rauchdurchlässige Struktur des Folienstreifens, z. B. in Form von Poren oder Lochungen, nicht erforderlich ist.

Zusätzlich ist bei der Verpackungshülle, da sie für zu räuchernde Nahrungsmittel verwendet werden soll, eine ausreichende Rauchdurchlässigkeit der Klebstoff enthaltenden Schicht vorzusehen, wie weiter unten noch ausgeführt wird.

Überraschenderweise läßt sich der Folienstreifen aus faserverstärktem Celluloseregenerat mit den für das Schlauchmaterial angegebenen mechanischen Eigenschaften auch als Aufreißband für den mit Füllgut gefüllten Schlauch, insbesondere für Wursthüllen, die vom Inhalt ohne großen Aufwand abgezogen werden sollen, verwenden. Hierzu werden z. B. nach dem Anschneiden der Wurst rechts und links unmittelbar neben dem Folienstreifen kleine Einschnitte in die Wursthülle vorgenommen, so daß der Folienstreifen und der mit ihm versiegelte Hüllenteil eine Art Grifflasche bildet. Beim Anziehen an dieser Grifflasche reißt die Wursthülle rechts und links neben dem Folienstreifen in längsaxialer Richtung ein.

Die Formung der Bahn zu einem Schlauch erfolgt beispielsweise entweder auf einer genügend langen Wegstrecke, so daß keine Verzerrungen und Faltenbildung erfolgt, oder durch Umlenkung über ein schulterartiges Formwerkzeug. Die beiden Seitenkanten der Bahn grenzen im wesentlichen abstandslos aneinander oder überlappen sich. Mittels am Schlauchumfang angreifender Transportelemente wird der Schlauch über die Oberfläche eines im Schlauchinneren angeordneten Stützkörpers bewegt. Der Folienstreifen wird vor dem Nahtschluß vorzugsweise mit seiner in Richtung zur inneren Oberfläche des Schlauches weisenden Klebstoffschicht zo zwischen die Oberfläche des Stützkörpers und den aneinanderstoßenden Rändern der Bahn eingeführt, daß die durch die Ränder der Bahn gebildete Stoßnaht die Mittellinie des Folienstreifens bildet, wobei der Folienstreifen beide Randzonen im wesentlichen gleich breit überdeckt. Die Verklebung erfolgt z. B. durch Kontakt mit einer Walze, wobei es zweckmäßig ist, auf die Verklebungsstelle zusätzlich Druck auszuüben und/oder Wärme einwirken zu lassen. Bahnbewegung und Verklebung kann taktweise oder kontinuierlich erfolgen.

Als Basismaterial für die Herstellung der Verpackungshülle dienen Bahnen aus faserverstärkter Cellulose (Zellglas, regenerierte Cellulose, Cellulosehydrat). So können faserverstärkte Cellulosebahnen, die nach dem Viskoseverfahren (US-A-3 884 270), durch Denitrierung von Cellulosenitrat oder Hydrolyse anderer Celluloseester, z. B. Deacetylierung von Celluloseacetat mit wäßriger oder alkoholischer Alkalilösung (US-A-3 546 209) hergestellt wurden, eingesetzt werden.

Die Faserverstärkung ist insbesondere bahnförmig, z. B. eine Papierbahn, und besteht gewöhnlich aus Fasern wie sie bei der Herstellung von Papier oder Reispapier verwendet werden, oder aus nativen Fasern wie Hanf- oder Flachsfasern, oder synthetischen Fasern wie Polyamid-, Polyester- oder Polyacrylnitril-Fasern. Die bahnförmige Faserverstärkung ist z. B. ein textiles Gebilde wie ein adhäsiv, mechanisch oder thermisch verfestigter Faservliesstoff aus wirr oder geordnet abgelegten Spinnfasern, Filamenten oder multiplen Filamentgarnen aus nativem oder synthetischem Material, ein Gewebe, Netzwerk, Gitter, Gewirke oder dergleichen.

Die Faserbahn wird vorzugsweise beidseitig mit einer Viskoselösung behandelt, insbesondere in eine Viskoselösung getaucht oder mit einer Viskoselösung beschichtet, z. B. mit schlitzförmigen Düsen, Walzen oder durch Sprühvorrichtungen, und anschließend in regenerierte Cellulose übergeführt. Es ist auch möglich, in die Viskose 10 bis 80 Gew.-% Verstärkungsfasern einzuarbeiten, die zweckmäßigerweise eine mittlere Faserlänge von 0,05 bis 15 mm aufweisen. Die Fasern bestehen aus organischen Kunstfasern, aus Naturfasern, z. B. Baumwollfasern oder aus Fibriden (US-A-2 999 788). Die Fasern enthaltende Viskose wird dann durch eine Düse in das Koagulationsbad ausgepreßt unter Bildung einer Gelbahn.

Die Viskoselösung ist eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium ; sie enthält meist noch 4 bis 20 Gew.-% Cellulose. Nach der Reifung wird die Viskose auf die Faserbahn aufgebracht und versponnen, d. h. koaguliert. Das Spinnbad enthält beispielsweise 20 bis 80 g/l Schwefelsäure, ferner 80 bis 150 g/l Natriumsulfat und/oder 200 bis 350 g/l Ammoniumsulfat.

In weiteren Stufen wird das aus Viskose-Gel bestehende faserverstärkte bahnförmige Produkt in saurem Medium, z. B. in verdünnter (kleiner/gleich 5 Gew.-%) Schwefelsäure, zu Cellulosehydrat-Gel regeneriert, zur Entfernung von Säure und Salzen mit Wasser gewaschen, mit z. B. Natriumsulfitlösung entschwefelt, gegebenenfalls durch ein Bleichbad und schließlich durch ein Weichmacherbad mit z. B. wäßriger 5 bis 20%iger Glycerin-, Sorbit- oder Glucoselösung (FR-PS 1 385 394) geführt.

Das Cellulosehydrat-Gel wird durch intensive Trocknung bei 90 bis 140 °C in regenerierte Cellulose übergeführt und durch Konditionierung auf einen Wassergehalt von etwa 5 bis 15 Gew.-% eingestellt. Die faserverstärkten Cellulosehydratbahnen zeigen nach der Trocknung eine Dicke von 50 bis 200 μm entsprechend einem Flächengewicht von 50 bis 250 g/m$^2$.

Es ist erfindungswesentlich, daß die Faserbahn, insbesondere während die Viskose regeneriert wird und anschließend bis zum abschließenden Trockenprozeß, gegebenenfalls aber auch bereits während der Beschichtung mit Viskose, an den Rändern festgehalten wird, so daß ein Schrumpfen der Bahn

verhindert wird. Das Festhalten der Faserbahn geschieht beispielsweise mit Nadelwalzen, Nadelbändern oder Nadelketten, die ein- oder mehrreihig ausgebildet sind. Diese ergreifen die Faserbahn an den beiden Rändern, so daß die Breite der Bahn während des gesamten Prozesses konstant gehalten wird. Die Zahl der Einstiche in den Randzonen ist möglichst gering zu halten, damit die Festigkeit der Bahn möglichst wenig verringert wird. Andererseits muß eine ausreichende Anzahl der Einstiche vorhanden sein, um eine ausreichende Schrumpfverhinderung zu gewährleisten. Auch Greifkluppenketten oder eine schnurförmige Führung aus säure- und alkalibeständigem Material, z. B. aus entsprechendem Kunststoff, können zum Festhalten der Ränder der Faserbahn eingesetzt werden. Bei der schnurförmigen Führung wird die Faserbahn an beiden Rändern mit jeweils einer Schnur festgehalten, wobei der Rand um diese Schnur gelegt und durch Kleben oder Schmelzen unter Hitzeeinwirkung oder mit einem Klebstoff befestigt ist. Diese Schnur läuft z. B. in einer Führungsschiene. Auch können sogenannte Breitzugwalzen zur Breithaltung der Bahn angewendet werden.

Ein weiterer wesentlicher Verfahrensschritt besteht darin, daß man die Bahn aus dem Cellulosehydrat-Gel während des Trockenprozesses am Schrumpfen hindert und dabei zusätzlich in Querrichtung vorzugsweise um etwa 5 bis 15, insbesondere 7 bis 12 % streckt, bezogen auf die ursprüngliche Breite der Faserbahn. Sofern während der Regenerierung ein geringer Schrumpf der Bahn in Querrichtung eingetreten ist, wird das Ausmaß der Querstrekkung während des Trocknens entsprechend erhöht. Vor diesem Strecken wird gegebenenfalls eine Vortrocknung durchgeführt, bei der die Hauptmenge an Wasser entfernt wird, bis die Gel-Bahn einen Wassergehalt von etwa 80 bis 150 Gew.-% aufweist.

Eine weitergehende Streckung quer zur Bahnrichtung erfolgt nicht, ebenso unterbleibt eine eigene Längsstreckungsstufe. Der während des Prozesses, insbesondere beim Koagulieren, Regenerieren und Trocknen, auftretende Schrumpf der Bahn in längsrichtung wird aufgehoben vor allem durch die auf die Bahn in Längsrichtung ausgeübte Zugkraft, die benötigt wird, um die Bahn durch die einzelnen Behandlungsstufen durchzuziehen.

Die infolge der schrumpfverhindernden Maßnahmen und der Querverstreckung während des Trockenprozesses erreichten Festigkeitswerte der Bahn in Längs- und Querrichtung sind wesentlich für die Herstellung der Schlauchhülle mit einer Längsnaht und für den aus dem gleichen Material bestehenden Folienstreifen zur Verbindung der Randzonen der Bahn.

Die Messung der Reißfestigkeit und der Reißdehnung erfolgt mit einer elektronischen Reißmaschine nach DIN 53 455. Unter Reißfestigkeit ist die Widerstandsfähigkeit des Probekörpers gegenüber der Zugbeanspruchung im Augenblick des Reißens zu verstehen. Sie wird gemessen als Reißkraft (N), bezogen auf den Querschnitt ($mm^2$). Die Reißdehnung ist die prozentuale Verlängerung des Probekörpers gegenüber der Ausgangslänge bei Belastung im Augenblick des Reißens und wird in Prozent angegeben. Der Probekörper hat eine Länge von 100 mm, breite von 15 mm und Dicke von 100 bis 110 µm.

Für einen nassen, d. h. in Wasser von 40 °C 30 Minuten lang gewässerten Probekörper aus dem erfindungsgemäßen Bahnmaterial liegt die Reißfestigkeit in Längsrichtung bei 15 bis 30, insbesondere 20 bis 30 $N/mm^2$ und die Reißdehnung bei 30 bis 50, insbesondere 30 bis 40 %. Die Reißfestigkeit in Querrichtung ist gleich vorzugsweise aber größer im Verhältnis zur Reißfestigkeit in Längsrichtung und zeigt Werte zwischen 15 bis 35, insbesondere von 25 bis 35 $N/mm^2$. Die Reißdehnung in Querrichtung liegt im gleichen Wertebereich wie in Längsrichtung, d. h. 30 bis 50, insbesondere 30 bis 40 %.

Bei einem getrockneten Probekörper aus dem Bahnmaterial der Erfindung, der eine Restfeuchte von 8 bis 10 Gew.-% Wasser und 20 bis 24 Gew.-% Glycerin enthält, liegt die Reißfestigkeit in Längsrichtung bei 50 bis 70, insbesondere 55 bis 65 $N/mm^2$ und die Reißdehnung bei 10 bis 22, insbesondere 12 bis 15 %. Die Reißfestigkeit in Querrichtung ist gleich groß, vorzugsweise aber größer im Verhältnis zur Reißfestigkeit in Längsrichtung und zeigt Werte zwischen 50 bis 75, insbesondere 65 bis 75 $N/mm^2$. Die Reißdehnung des getrockneten Probekörpers liegt bei 8 bis 19, insbesondere 8 bis 12 %.

Unter Haftvermittler in bezug auf Klebstoffe sind bekanntlich Stoffe oder Stoffgemische zu verstehen, die vor dem Klebstoffauftrag auf eine oder beide Klebflächen aufgebracht werden, um die Haftung zwischen Klebstoff und Klebflächen zu verbessern. Falls erforderlich, soll er im vorliegenden Fall die Klebstoffschicht auf der Bahn und/oder Folienstreifen naßfest verankern. Er wird insbesondere eingesetzt, wenn der Klebstoff ein Haftklebstoff ist und befindet sich zwischen der Klebstoffschicht und der Bahn und falls erforderlich zwischen der Klebstoffschicht und dem Folienstreifen. Er ist vorzugsweise ein wasserunlösliches gehärtetes, kationisches hitzehärtbares Harz. Polyurethanharze, Nitrocellulose und andere als wasserunlösliche Verankerungsmittel bekannte Verbindungen können ebenfalls eingesetzt werden.

Obwohl die haftvermittelnde Harzschicht im Prinzip nur im Bereich der zu verklebenden Flächen der endlosen Bahn vorhanden sein müßte, ist es aus technischen Gründen zweckmäßig, eine Oberfläche, für bestimmte Anwendungen oder überlappende Klebungen auch beide Oberflächen, der Bahn vollflächig mit einer oder zwei verschiedenen haftvermittelnden Harzschichten zu versehen, sofern diese ausreichend rauchdurchlässig ist.

Zusätzlich kann die Bahn auf der die spätere Innenseite der Schlauchhülle bildenden Oberfläche ein übliches Mittel zur Verbesserung der Schälbarkeit der Schlauchhülle aufweisen. Zu diesen Mitteln zählen z. B. wasserlösliche Proteine, wie Gelatin, Eialbumin und Glutenin. Diese Mittel sind allerdings nur bei speziell haftvermittelnden Harzen erforderlich, bei gehärteten, kationischen hitzehärtbaren Harzen auf

der Innenseite der Schlauchhülle ist bereits ohne zusätzliches Mittel eine ausreichende Schälbarkeit gewährleistet. Zudem zeigen diese Harze den Vorteil, daß sie ohne zusätzliche Maßnahmen überraschenderweise ausreichend durchlässig gegenüber Wasserdampf und Rauch sind.

Vorzugsweise wird die faserverstärkte Bahn aus Cellulosehydrat mit einer wäßrigen Lösung überzogen, die bis zu 25 Gew.-% eines dispergierbaren, wärmehärtbaren kationischen Harzes enthält, und das überzogene Material so lange auf 65 bis 125 °C erhitzt, bis der Feuchtigkeitsgehalt unter 10 Gew.-% liegt. Durch das Erhitzen wird das Harz zu seiner wasserunlöslichen Form gehärtet und geht eine dauerhafte Bindung mit der Oberfläche der Bahn ein. Vorzugsweise wird die Überzugslösung bei der Herstellung der faserverstärkten Bahn aus Cellulosehydrat auf die bereits regenerierte, aber noch nicht getrocknete Gelbahn aufgebracht. Dieser Auftrag kann vor, gleichzeitig oder nach der Behandlung der Gelbahn mit einem Weichmacher, wie z. B. einem Polyol, vorgenommen werden. Die Harzschicht hat ein Flächengewicht von etwa 30-300 $mg/m^2$, vorzugsweise 40 bis 75 $mg/m^2$.

Als geeignete Lösungsmittel für das hitzehärtbare Harz werden niedrige aliphatische oder aromatische Kohlenwasserstoffe, niedrige Alkohole oder Ester oder Mischungen dieser Lösungsmittel eingesetzt. Vorteilhaft wird eine wäßrige Lösung oder Dispersion verwendet.

Falls für bestimmte Anwendungen gewünscht, wird zusammen mit dem hitzehärtbaren Harz ein zusätzliches wasserabstoßendes Harz wie Paraffin, Montanwachs, Carnaubawachs und/oder geeignete Verdickungsmittel, wie Celluloseäther oder Stärke, auf die Schlauchhülle aufgetragen.

Die Schlauchhülle kann auch vor, vorzugsweise aber nach Aufbringen des hitzehärtbaren Harzes und vor dem Verkleben mit Beschriftungen oder dekorativen Mustern bedruckt werden, wobei neben dem bei der Herstellung von nahtlosen Wursthüllen üblichen Druckverfahren noch weitere Druckmöglichkeiten sich anbieten, da im vorleigenden Fall die flache Bahn vor der Schlauchformung bedruckt werden kann.

Der Überzug aus hitzehärtbarem Harz ist beispielsweise frei von Pigmenten und organischen Farben und bildet somit eine klare Schicht, durch die eine eventuelle Bedruckung gut sichtbar bleibt. Es kann aber auch ein transparente organischer Farbstoff verwendet werden, um der Verpackungshülle eine entsprechende Farbe zu verleihen.

Neben dem hitzehärtbaren Harz enthält die Schicht auf der Schlauchhülle im Bereich der Verbindungsnaht gegebenenfalls Pigmente, einen Weichmacher für das hitzehärtbare Harz und/oder ein Härtungsmittel für das hitzehärtbare Harz. Das hitzehärtbare Harz und der Weichmacher werden in einem geeigneten flüssigen Lösungs- bzw. Dispergiermittel aufgenommen, das vorteilhafterweise bei einer Temperatur verdampft werden kann, bei der gleichzeitig zumindest eine Vorhärtung des Harzes eintreten kann.

Als Beispeile für das hitzehärtbare Harz sind zu nennen: Harnstoff-Formaldehyd-, Melamin-Formaldehyd- und Phenol-Formaldehyd-Harze. Als bevorzugter Weichmacher für diese hitzehärtbaren Harze dienen weiche, nicht-härtbare Harze vom Alkyl-Typ oder auch Dibutylphthalat, Trikresylphosphate oder Dibutylsebacat.

Als Härter für das hitzehärtbare Harz kann beispielsweise Ammoniumthiocyanat, Toluolsulfonsäure, Maleinsäure oder Milchsäure eingesetzt werden. Diese Verbindungen verhalten sich wie Katalysatoren bei der Härtung der hitzehärtbaren Harze.

Besonders bevorzugte hitzehärtbare Harze sind Kondensationsprodukte von Polyamidpolyamin oder aliphatischen Polyaminen oder von Polyamiden mit bifunktionellen Halohydrinen oder deren Derivaten wie z. B. Epichlorhydrin, wie sie beispielsweise in der US-A-2,573,956 oder in den GB-A-865,727 und GB-A-908,205 beschrieben sind. Ein besonders geeignetes Harz ist beispielsweise das Reaktionsprodukt aus aliphatischem 2,6-Polyamid, Di-Äthylentriamin und Epichlorhydrin.

Als Polyamine kommen einfache Alkylendiamine in Betracht oder Polyalkylenpolyamine wie beispielsweise Diäthylentriamin, Triäthylentetramin, Tetraäthylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Im allgemeinen werden von 1,5 bis 4,0 Mol Epichlorhydrin, meist 2 bis 3 Mol angewendet. Die Umsetzung erfolgt in wäßriger Lösung, bei mäßig erhöhter Temperatur (etwa 50 °C), bis der gewünschte Viskositätsgrad erreicht ist. Vorzugsweise verwendet man Umsetzungsprodukte von Epichlorhydrin mit Dipropylentriamin oder mit Bis(3-Aminopropyl)methylamin, wobei man 2,8 bis 3,8 Mol Epichlorhydrin mit 1 Mol Polyamin umsetzt.

Die Polyamid-Polyamine sind Kondensationsprodukte einer gesättigten, aliphatischen, zweibasischen Säure, die 3 bis 8 Kohlenstoffatome im Molekül aufweist mit einem der oben genannten Polyamine, das mindestens eine sekundäre und zwei primäre Amingruppen aufweist, wie beispielsweise die oben genannten Polyalkylenpolyamine. Vorzugsweise weren Diglykolsäure, Bernsteinsäure, Glutarsäure und Adipinsäure als zweibasische Säure verwendet. Es können auch Gemische zweibasischer Säuren verwendet werden. Die Gemische der Säuren können auch mehr als acht Kohlenstoffatome im Molekül aufweisende Säuren enthalten, sofern deren Anteil an der Mischung nicht verhindert, daß das daraus hergestellte Polyamin-Polyamid in Wasser echt löslich oder wenigstens kolloidal löslich ist. Ein Teil der Polyamine, die mit der zweibasischen Säure umgesetzt werden, kann durch Alkylendiamine ersetzt sein. Deren Anteil kann bis zu 30 % betragen. Die Umsetzung zwischen dem Polyamin und der zweibasischen Säure wird bei etwa 110 bis 250 °C, meist bei etwa 160 bis 210 °C, durchgeführt. Etwa 0,8 bis 1,4 Mol der Säure werden je Mol Polyamin angewendet. Dit erhaltenen Polyamin-Polyamide werden in wäßriger

Lösung bei etwa 50 °C mit 0,5 bis 1,8 Mol Epichlorhydrin je sekundäre Aminogruppe umgesetzt, vorzugsweise verwendet man etwa 0,9 bis 1,5 Mol Epichlorhydrin.

Das Harz wird in einer wäßrigen Lösung, die etwa 0,3 bis 2,0 Gew.-%, vorzugsweise 1 bis 1,3 Gew.-% des Chlorhydrinharzes enthält, auf die für die Beschichtung vorgesehene faserverstärkte Cellulosebahn aufgetragen, vorzugsweise auf die noch feuchte, noch nicht getrocknete Gel-Bahn. Man kann die wäßrige Lösung jedoch auch auftragen, nachdem die Cellulosebahn getrocknet worden ist, was zwar den Vorteil hat, daß man Lösungen mit geringerem Gehalt an Harz zur Erzielung der gleichen Wirkung benötigt, was jedoch gelegentlich zu ungleichmäßiger Imprägnierung führt. Nach dem Auftragen der wäßrigen Lösung des Verankerungsmittels wird die Bahn bei mäßiger Wärme (etwa 100 °C) getrocknet.

Die Permeationseigenschaften der Verpackungshülle im Verklebungsbereich werden durch die Verankerungsschicht aus dem gehärteten, kationischen, hitzehärtbaren Harz nicht oder nur ganz unwesentlich beeinflußt. Diese Eigenschaft ist von besonderer Bedeutung für die Durchlässigkeit gegenüber Wasserdampf und Räucherrauch, wenn die Schlauchhülle für Dauerwurstwaren oder geräucherte Brühwürste verwendet wird. Bei zu geringer Durchlässigkeit würde sich z. B. der typische rötlich-braune Farbton des geräucherten Wurstbräts nicht einstellen.

Der Klebstoff wird entweder direkt in Form einer Emulsion, Dispersion oder Lösung, z. B. in Wasser, Benzin, Siedebereich 65 bis 95 °C, Aceton, Essigester, Toluol, chlorierten Kohlenwasserstoffen oder in Lösungsmittelgemischen, z. B. Aceton/Benzin, oder in Schmelze auf die Überlappungsflächen der Bahn aufgebracht. Es ist aber auch möglich, die Klebstoffschicht zunächst als dünnen Film auf ein Trägerband aufzubringen, das aus einem antiadhäsiv ausgerüsteten Material, z. B. aus Siliconpapier oder aus siliconisierter Kunststoffolie, besteht. Der Klebstoff wird dann auf die Überlappungsflächen übertragen und danach das antiadhäsiv ausgerüstete Trägerband vom Klebstoff-Film abgezogen. Wird ein Folienstreifen zur Verbindung der Randbereiche der längsaxial sich erstreckenden Randzonen der Bahn verwendet, so wird der Klebstoff vorteilhafterweise zunächst auf den Folienstreifen aufgebracht. Anschliessend wird der Folienstreifen zum Verkleben der Randzonen mit der Klebstoffschicht auf die Randzonen aufgedrückt. In einer weiteren Variante besteht der Folienstreifen selbst aus zur Verklebung geeignetem Material z. B. aus siegelfähigem, thermoplastischem Material, so daß sich der Auftrag einer Klebstoffschicht auf den Folienstreifen erübrigt.

Es ist auch möglich einen Folienstreifen, z. B. aus Polyester, insbesondere aus faserverstärktem Cellulosehydrat, mit beidseitiger Klebstoffbeschichtung zu verwenden. Dieser Folienstreifen wird mit einer seiner beiden klebenden Oberflächen auf eine der beiden längsaxial sich erstreckenden Randzonen der endlosen Bahn in längsaxialer Richtung ganzflächig aufgeklebt, während die andere klebende Oberfläche des Folienstreifens gegebenenfalls noch mit einem abziehbaren Schutzband abgedeckt ist. Danach wird der Schlauch unter Überlappung der beiden längsaxial sich erstreckenden Randzonen der Bahn geformt, wobei sich der Folienstreifen in der Überlappung zwischen den Randzonen befindet. Nach Abziehen des Schutzbandes von der zweiten klebenden Oberfläche wird diese mit der zweiten Randzone verklebt.

Die mit der Klebstoffschicht zu versehende Oberfläche aus faserverstärkter regenerierter Cellulose befindet sich beim Klebstoffauftrag im noch nicht getrocknetem, getrocknetem oder wieder angefeuchteten Zustand und weist zweckmäßigerweise ein Verankerungsmittel auf. Nach dem Auftragen wird das Dispergier- bzw. Lösungsmittel entfernt, z. B. durch Erhitzen mit Heißluft. Die Bahn wird gewöhnlich bis zu einem Feuchtigkeitsgehalt von weniger als 15 Gew.-%, vorzugsweise 5 bis 10 Gew.-%, getrocknet. Eine Überzugsdicke der Klebstoffschicht im Bereich von etwa 0,02 bis 0,5 mm ist im allgemeinen ausreichend. Die bevorzugte Dicke des Klebstoffilms ist etwa 20 bis 150 µm, insbesondere etwa 25 bis 50 µm.

Die Gesamtbreite des Klebstoffauftrags wird je nach gewünschten Festigkeitswerten und Kalibern zwischen etwa 3 bis 70 mm gewählt und beträgt vorteilhafterweise 5 bis 15 % des späteren Hüllenumfanges. Bei Verwendung eines Folienstreifens zur überlappenden Verbindung einer aus den Randzonen gebildeten Stoßnaht ist ein entsprechend doppelt so breiter Klebstoffauftrag erforderlich.

Im Gegensatz zur Beschichtung der Bahn mit dem haftvermittelnden Harz erfolgt der Auftrag des Klebstoffs nicht über die gesamte Fläche der Bahn, sondern nur im gewünschten Verklebungsbereich, d. h. entlang der beiden längsaxial sich erstreckenden Ränder und/oder auf der Oberfläche des Folienstreifens.

Es hat sich allerdings gezeigt, daß eine in üblicher Weise aufgetragene Klebstoffschicht gewöhnlich eine ausreichende Rauchdurchlässigkeit nicht gewährleistet. Mit Wurstbrät gefüllte, geklebte Schlauchhüllen aus faserverstärktem Celluloseregenerat zeigen nach dem Räuchern im Bereich der vollflächigen Verklebungsnaht keine oder nur unvollständige Räucherfarbe.

Es ist bekannt, daß die Räucherfärbung durch Reaktion von Phenolen und Carboxylverbindungen mit Proteinen zustande kommt, wobei ihre Intensität und Haltbarkeit besonders vom Wassergehalt der Hülle, vom pH-Wert des Substrats sowie von Dauer und Höhe der Erhitzung abhängen. Die Hauptbestandteil im Rauch darstellenden flüchtigen Carbonsäuren, die für die Färbung besonders maßgeblich sind, müssen deshalb den Nahtbereich der Schlauchhülle passieren können.

Zur Verbesserung der Rauchdurchlässigkeit ist es deshalb erforderlich, die Klebstoffschicht nicht vollflächig auf die Bahn bzw. den Folienstreifen aufzubringen, sondern mit Unterbrechungen oder Ausnehmungen. Die Klebstoffschicht kann auch in Streifen, spiralförmig oder punktförmig gerastert aufgetragen werden, z. B. mit einer profilierten Walze, die der Klebstoffschicht eine Struktur verleiht. Die

Auftragswalze kann auch eine Textilstruktur oder eine Bürstenoberfläche aufweisen. Es ist auch möglich den Klebstoff mit mehreren Düsen, die sich quer zur Bahn hin- und herbewegen, auf die bewegte Bahn auszupressen, wobei ein wellenförmiges Streifenmuster der Klebstoffschicht erzeugt wird.

Besonders vorteilhaft ist der Antrag einer Klebstoffdispersion, z. B. in einer regelmäßigen Punkt- oder Linienrasterstruktur, im Rotationssiebdruck oder Tiefdruck, der mit einer Geschwindigkeit bis zu etwa 100 m/Min. durchgeführt werden kann. Die Schichtdicke des Klebstoffs von 25 bis 30 μm bei einer Flächenabdeckung von 40 bis 60 % ergibt eine ausgezeichnete Rauchdurchlässigkeit bei ausreichender Festigkeit der Verbindungsnaht. Der gleiche Erfolg wird erreicht durch Öffnungen, Poren oder Perforationen de Klebstoffschicht und gegebenenfalls auch der Randbereiche der Bahn und des Folienstreifens, wobei der Durchmesser dieser Durchlässe auch im Mikro- oder Nanometerbereich liegen kann. Diese Öffnungen, Poren oder Perforationen können mechanisch vor oder nach dem Herstellen der Schlauchform bzw. Klebenaht erzeugt werden, z. B. durch Stanzen, Prägen, Lochen oder Nadeln der mit der Klebstoffschicht versehenen Randzonen und/oder Folienstreifens, wobei der Durchmesser etwa 0,7-1,2 mm ist. Geeignete Durchlässe lassen sich auch auf chemischem Weg, z. B. durch partielles Ablösen der Klebstoffschicht von den Randzonen oder von dem Folienstreifen vor dem Bilden der Klebenaht, erzeugen.

Es kann ferner eine extrahierbare pulverförmige Substanz, beispielsweise ein Polymeres wie Stärke, Polystyrol oder Zucker, oder ein Salz, z. B. Natriumchlorid oder Natriumbicarbonat, in den Klebstoff eingearbeitet werden, welche nach dem Auftragen des Klebestoffs auf den Folienstreifen oder auf die längsaxial sich erstreckenden Randzonen der Bahn unter Bildung von Poren in der Klebstoffschicht herausgelöst wird. Es ist auch möglich, dem Klebstoff einen rauchdurchlässigen Zusatzstoff beizumischen, z. B. eine poröse Substanz oder organische Pigmente mit hoher Rauch- bzw. Gasdurchlässigkeit. Auch Fällungsreaktionen, wie sie bei der Herstellung von mikroporösen Folien und Membranen bekannt sind, können die Rauch- bzw. Gasdurchlässigkeit der Klebstoffschicht verbessern. Hierzu wird der Klebstoff in zwei flüchtigen, miteinander mischbaren Lösungsmitteln gemischt, das Gemisch auf einen Trägerfilm oder auf den zu verbindenden Randzonen ausgebreitet und die Lösungsmittel verflüchtigt, wobei das polymere Material unter Bildung einer porösen Struktur koaguliert. Der Klebstoff oder polymere Teile des Klebstoffs sind hierbei in dem einen Lösungsmittel schwer ode nicht löslich. Andererseits kann der Klebstoff auch in einem Lösungsmittel gelöst oder dispergiert werden und, z. B. nach Auftrag auf die Verbindungsflächen der Bahn, zur Koagulation mit einem flüssigen, mit dem Lösungsmittel mischbaren Fällmittel behandelt werden. Zur Verbesserung der Gas- und Rauchdurchlässigkeit können der Klebstoffschicht auch feinpulverige thermoplastische Kunststoffe zugesetzt werden, die bei erhöhter Temperatur durch Sintern eine mikroporöse Struktur in dieser Schicht bilden. Auch mit dem Zusatz von Gasen, z. B. Luft, Stickstoff, Kohlendioxid, oder fluorierten Kohlenwasserstoffen, in Form kleiner Blasen, die gegebenenfalls in der Hitze ausgedehnt werden, läßt sich die Gas- und Rauchdurchlässigkeit der Klebstoffschicht verbessern, wobei diese Schicht z. B. auf die Randzonen der Bahn oder auf den Folienstreifen aufgesprüht wird. Das Gas kann auch durch Zusatz eines in der Hitze gasbildenden Mittels, z. B. Azoverbindungen oder Carbonate, erzeugt werden.

Die Klebstoffschicht kann auch, eventuell zusätzlich, ein textiles flächenhaftes, streifenförmiges, ketten- oder fadenförmiges Gebilde, z. B. einen adhäsiv, mechanisch oder thermisch verfestigten Faservliesstoff aus wirr oder geordnet abgelegten Spinnfasern, Filamenten oder multiplen Filamentgarnen aus nativem oder synthetischem Material, ein Gewebe, Netzwerk, Gitter oder dergleichen oder eine Schwamm- oder Schaumstoffolie, insbesondere mit offenporiger Struktur, enthalten.

Wie sich überraschenderweise gezeigt hat, sind die beschriebenen Ausführungsformen der Schlauchhülle mit guter Rauchdurchlässigkeit im Verklebungsbereich ausreichend stabil und mechanisch und thermisch belastbar.

Als Klebstoff wird vorzugsweise ein Stoffsystem verwendet, das ohne chemische Reaktion abbindet. Hierzu zählen Schmelzklebstoffe, die lösungsmittelfrei sind, ebenso wie Klebstofflösungen, deren Lösungsmittel man allerdings bereits vor der Klebung entweichen läßt. Zu den letzteren zählen insbesondere Heißsiegelklebstoffe, Kontaktklebstoffe und Haftklebstoffe. Eine wesentliche Voraussetzung ist, daß der Klebstoff physiologisch unbedenklich ist.

Schmelzklebstoffe, auch « Hot-melt-Klebstoffe » genannt, sind nicht härtende, schmelzbare thermoplastische Harze, die bei Raumtemperatur fest sind und die beim Verklebungsvorgang vorübergehend geschmolzen werden, wobei sie keine chemische Veränderung erleiden. Nach dem Erkalten und Erstarren haften sie fest an der Substratoberfläche. Als Polymerrohstoff dienen in erster Linie Äthylen-Vinylacetat-Copolymere, insbesondere mit einem Vinylacetat-Gehalt von 18 bis 40 Gew.-%, vorzugsweise etwa 30 %, und einem Schmelzindex von 4 bis 500, insbesondere 40 bis 400. Auch niedermolekulare Polyäthylene, ataktische Polypropylene, Äthylen-Acrylester-Copolymere, carboxylgruppenhaltige, Copolymere, Styrol-Butadien- und Styrol-Isopren-Blockcopolymere, schmelzbare aliphatische oder aromatische Polyester, z. B. schwach verzweigt und hydroxylgruppenhaltig, Polyurethane, Polyamidharze, insbesondere mit relativ niedrigem Schmelzpunkt und Schmelzviskosität, sowie Polyaminoamide sind als Basisharz für den Schmelzklebstoff geeignet. Neben diesen Harzen enthalten diese Klebstoffe gewöhnlich noch Harze, wie Balsamharze, Kolophoniumderivate, Kohlenwasserstoffharze, Wachse bzw. Paraffine, Oxidationsstabilisatoren, Weichmacher, Pigmente und/oder Füllstoffe.

Es werden Schmelzklebstoffe bevorzugt, die sich bei relativ niedriger Temperatur verarbeiten lassen,

z. B. bei 140 bis 170 °C. Sie müssen andererseits kochfest, hydrolysenunempfindlich und ausreichend flexibel sein.

Heißsiegelklebstoffe sind Klebstoffe, die — wie die Schmelzklebstoffe — bei der Verklebung thermisch aktiviert werden. Sie werden gewöhnlich in Form von Lösungen, Dispersionen oder Emulsionen in Wasser oder organischen Lösungsmitteln auf mindestens eine der beiden gegeneinander zu siegelnden Oberflächen aufgebracht. Die abgebundene, lösungsmittelfreie Schicht soll nicht klebrig sein, sondern erst durch Wärmezufuhr während der Siegelung aufschmelzen und sich beim Abkühlen wieder verfestigen. Dabei wird Beschichtung gegen Beschichtung oder Beschichtung gegen Verankerungsschicht gesiegelt.

Als Rohstoff werden Copolymere des Vinylchlorids oder des Vinylidenchlorids in Lösung oder auch in Dispersion unter Zusatz von Harzen und anderen Polymeren benutzt. Daneben werden Copolymere des Vinylacetats sowie Polymethacrylsäureester, Polyurethane und Polyester, insbesondere Äthylen-Vinylacetat-Copolymere, Vinylacetat-Vinylchlorid-Copolymere, Polyamide und Polyäthylen, angewendet.

Als siegelfähiges thermoplastisches Material wird insbesondere ein Vinylidenharz, das mit einem Flächengewicht von gewöhnlich 3 bis 12 $g/m^2$ vorhanden ist, eingesetzt. Hierzu gehören filmbildende Harze, die durch Mischpolymerisation von Monomeren erhalten werden, wobei wenigstens eine Komponente eine Vinylidengruppe enthält.

Im allgemeinen können filmbildende Vinylidenharze verwendet werden, die im polymerisierten Molekül wenigstens 5 Gew.-%, vorzugsweise aber mindestens 80 Gew.-% Vinylidenchlorid enthalten. Als Comonomere seien genannt : Vinylchlorid, Vinylbromid, Vinylacetat, Vinylpropionat, Vinylchloracetat, Alkylacrylat oder Methacrylat, wie beispielsweise Methyl-, Äthyl-, Propyl-, Butyl-, Isobutyl-, Methoxyäthyl- oder Chloräthylacrylat oder -methacrylat, Methylvinylketon, Methylisopropenylketon, Acrylnitril, Methacrylnitril, Styrol, Vinylnaphthalin, Äthylvinyläther, Butylvinyläther, N-Vinylphthalimid, N-Vinylsuccinimid, N-Vinylcarbazol, Methylen-diäthylmalonat, ungesättigte organische Säuren, wie Itaconsäure oder Mischungen von diesen Verbindungen. Das Copolymerisat kann neben Vinylidenchlorid eins bis drei dieser Monomeren enthalten.

Auch diese Klestoffe können übliche Wachse, z. B. auf Basis von veresterten Montansäuren, Polyolefinwachse oder auf Basis von Oxazolin, und/oder übliche Füllstoffe, beispielsweise Kaolin, insbesondere hydrophobiertes Kaolin, Kieselsäure oder Calciumcarbonat (Kreide) mit einer bevorzugten mittleren Korngröße von 1 bis 3 μm enthalten.

Ferner werden übliche Zusätze an Weichmachern, z. B. Ester der Phthalsäure, wie Dibutylphthalat, Ester der Citronensäure, wie Acetyltributylcitrat, der Sebacinsäure oder Weinsäure, wie Diisobutyltartrat, verwendet.

Die Versiegelung erfolgt z. B. durch Kontakt mit einer auf eine bestimmte Temperatur vorgeheizten Siegelbacke oder -rolle. Für die Versiegelung kann jedoch jede andere Wärmequelle in Frage kommen, wie beispielsweise IR-Strahler, Hochfrequenz-Erwärmung oder Heißluft. Häufig ist es zweckmäßig, zusätzlich Druck auf die Siegelstelle auszuüben, z. B. durch Anpressen einer geheizten Rolle. Die angewandten Siegeltemperaturen und Drucke hängen weitgehend von den Stoffeigenschaften der Siegelschichten ab. In der Praxis wird man gewöhnlich Siegelschichten bevorzugen, die im Temperaturbereich von 120 bis 150 °C Verbindungsnähte ergeben, die den Beanspruchungen in der Praxis standhalten.

Kontaktklebstoffe müssen auf beide zu verklebende Oberflächen aufgetragen werden. Die Klebstoffschichten werden erst dann zur Verklebung gebracht, wenn die Lösungsmittel nahezu vollständig abgedunstet sind. Für die Verklebung ist ein kurzzeitiger, aber möglichst hoher Kontaktdruck notwendig. Diese Klebstoffe bestehen gewöhnlich aus synthetischen Kautschukarten in Mischung mit Harzen oder aus hochmolekularen Polyurethanelastomeren.

Unter Haftklebstoff wird im allgemeinen ein dauerklebriger Stoff verstanden, der in lösungsmittelfreier oder dispergiermittelfreier Form an den meisten Werkstoffoberflächen schon unter leichtem Andruck spontan haftet. Er wird auch als « Pressure sensitive adhesive » bezeichnet.

Als Rohstoff für den Haftklebstoff dienen vorzugsweise Polyacrylsäureester oder Polymethacrylsäureester, jedoch sind im Prinzip auch andere Haftklebstoffe geeignet, sofern sie die an sie gerichteten Forderungen, z. B. bezüglich der hohen Kochfestigkeit und physiologischen Unbedenklichkeit, erfüllen. Auch Dispersionhaftklebstoffe, z. B. auf Basis von Polyacrylsäureester oder Vinylacetat-Copolymerisaten, gegebenenfalls unter Zusatz von geeigneten Harzen, oder Schmelzhaftklebstoffe, die neben geeigneten Harzen Äthylen-Vinylacetat-Copolymere und Styrol-Butadien- bzw. Styrol-Isopren-Blockcopolymere enthalten, sind im Prinzip geeignet, doch muß im Einzelfall geprüft werden, ob diese Haftklebstoffe die an sie gerichteten Forderungen im befriedigendem Maße erfüllen können.

Der Haftklebstoff besteht aus einem hochpolymeren Basisharz, das die Kohäsionseigenschaft und die spezifische Haftung bestimmt, und gewöhnlich einem klebrigmachenden Harz, das auch durch niedermolekulare Anteile des Basispolymeren ersetzt sein kann. Ein solches Harz wird überwiegend in gelöster Form zum Basisharz gegeben. Verwendung können z. B. finden : Naturharze, wie Balsamharze, modifizierte Naturharze, z. B. auf Basis von Hydroabietylphthalat oder Estern des Kolophoniums, Polyterpen-, Terpenphenol-, Cumaron-Inden-, Keton- und Kohlenwasserstoffharze. Durch den Zusatz von klebrigmachenden Harzen wird die Oberflächenklebrigkeit und Schälfestigkeit erhöht, doch kann hierbei gegebenenfalls eine Verminderung der Kohäsion eintreten. Zur Erhöhung der Kohäsion sowie der

Wärmestandfestigkeit und Scherfestigkeit der Verklebung ist es z. B. möglich, das Basisharz nach dem Auftrag auf den verbindenden Folienstreifen oder auf die Bahnoberfläche zu vernetzen, z. B. mit chemischen Zusätzen bei Raumtemperatur oder thermisch durch 5 bis 15 minütiges Erwärmen auf 130 bis 140 °C, wobei auch eine wesentlich verbesserte Heißwasserbeständigkeit der Klebenaht erzielt werden kann. Hierzu ist es erforderlich, dem Klebstoff Vernetzungsmittel zuzusetzen, die mit reaktionsfähigen Gruppen des Polymeren unter Vernetzung reagieren, oder man verwendet als Basisharz ein Homo- oder Copolymerisat, in dem reaktive, d. h. vernetzbare Comonomere mit funktionellen Gruppen, z. B. Carboxyl-, Amid-, Amino-, Methylol- oder Hydroxylgruppen, einpolymerisiert sein können, die die Hafteigenschaften verbessern und/oder eine begrenzte Vernetzung des Klebstoffilms ermöglichen. Im allgemeinen sind diese Komponenten mit funktionellen Gruppen zwar von Vorteil, denn sie steigern die Kohäsion des Haftkleberfilms, doch sind sie nicht unbedingt erforderlich. Als Beispiele für solche Copolymerisate sind zu nennen : anionenaktive Copolymerisate aus Acrylsäureestern, Vinylacetat, ungesättigter Carbonsäure, wie Acrylsäure, Methacrylsäure, Itaconsäure, und einer Glycidylverbindung, wie Glycidylacrylat oder Glycidylmethacrylat, Copolymerisate mit bifunktionellen Monomeren wie Triäthylenglykol-dimethacrylat oder -diacrylat, Tetramethylenglykoldiacrylat, oder -dimethacrylat, Copolymerisate von Acrylsäureestern, 1-Halogencarbonsäurevinylester, wie z. B. Chloressigsäurevinylester, 1,2-ungesättigten Carbonsäuren , wie Acrylsäure, oder ungesättigten Dicarbonsäuren, und als 4. Komponente eine Hydroxylgruppen enthaltende polymerisierbare Einheit, Copolymerisate von N-Methylolacrylsäureamid (oder N-Methylolmethacrylsäureamid) mit Acrylsäureestern (bzw. Methacrylsäureestern), die noch freie, nicht veresterte Carboxylgruppen aufweisen, wobei dieses Copolymerisat thermisch unter Wasserabspaltung vernetzt wird. Ferner dient als reaktives Comonomeres auch N-(1.1-Dimethyl-3-oxo)butyl-acrylamid

$$CH_2 = CH—CO—NH—C(CH_3)_2—CH_2—CO—CH_3$$

Die Doppelbindung gestattet die Copolymerisation, während die Keto-Gruppe und die H-Atome benachbart zur Keto-Gruppe die Vernetzungsreaktion ermöglichen. Die Vernetzung kann durch Erhitzen mit Peroxiden eingeleitet werden. Ein geeigneter vernetzbarer Haftkleber enthält beispielsweise ein Copolymerisat auf Basis von Acrylsäureestern unter Mitverwendung von Acrylnitril und carboxylgruppenhaltigen Monomeren, die bei Zugabe von Laugen oder Salzen ein- oder mehrwertiger Metalle, wie z. B. Ammoniak, Alkalilauge oder Aluminiumsalz, bereits kalt, d. h. bei Raumtemperatur, vernetzt werden. Als weitere Comonomere sind Acrylsäurehydrazide und Acrylathydrazone in Acrylsäureester enthaltenden Copolymerisaten zu nennen.

Für die Schlauchhülle aus faserverstärktem Cellulosehydrat werden besonders vorteilhaft Polyacrylsäureester als Haftklebstoffe verwendet, wobei die Säuregruppen mit einem oder mit verschiedenen aliphatischen Alkoholen mit 1 bis 12 C-Atomen, insbesondere aber mit 4 bis 8 C-Atomen, wie z. B. Butylalkohol oder 2-Äthylhexanol, verestert sind.

Auch die Haftklebstoffschicht kann noch weitere nichtklebende Zusätze enthalten, wie sie bei Klebstoffen an sich üblich sind, z. B. hochviskose Verdickungsmittel auf Basis von Homo- oder Copolymerisaten von polyacrylsauren Salzen oder Polyvinylpyrrolidon, Konservierungsmittel, um die Klebstoffschicht vor derm Befall durch Mikroorganismen zu schützen, Netzmittel, Weichmacher z. B. auf Basis von Phthalsäureestern mit geradkettigen (Butanol) oder verzweigten (2-Äthylhexanol) Alkoholen, Füllstoffe wie Kaolin, Glaskugeln, Kreide, Quarzmehl, Mikrodolomit, Schwerspat, feinkörnigen Sand, Zinkoxid und Pigmente sowie organische und anorganische Farbstoffe in Pulver- oder Schuppenform.

Mit Haftklebstoffen hergestellte Bindungen lassen sich bekanntlich mehrmals lösen und wieder zusammenfügen. Es ist deshalb völlig überraschend, daß gerade diese Klebstoffe in Kombination mit einem der oben genannten haftvermittelnden Harze als Grundierschicht beim Verkleben von Bahnen unter Ausbildung von Schlauchhüllen eine ausreichend feste Naht bilden. Besonders bei der Herstellung von Würsten, bei der die Naht beim Brühen der Wurst längere Zeit heißem Wasser von etwa 80 °C ausgesetzt ist, sowie beim Füllen, Abdrehen, Abbinden, Klippen und dergleichen, wenn die Naht hoher mechanischer Belastung und Spannungen standhalten muß und Dimensionsänderungen eintreten, hat sich gezeigt, daß diese Kombination aus faserverstärkter Cellulosebahn haftvermittelndem Harz und Haftklebstoff, auch wegen dessen elastischen Charakters, besonders vorteilhaft ist. So zeigen die Haftklebstoffe aufgrund ihrer Dauerklebrigkeit den Vorteil, daß die zu verbindenden Teile auf schnelle und einfache Weise mit ausreichender Haftfestigkeit gegenüber scherender Belastung miteinander verklebt werden können. Unter scherender Belastung ist das Einwirken von tangentialen Zugkräften auf die Klebenaht senkrecht zur Längsachse der Schlauchhülle zu verstehen.

Wie sich zeigte, liegt die Reißkraft von Klebestellen mit 35 bis 45 N/15 mm Probenbreite im gleichen Bereich wie die Reißkraft des Materials der Schlauchhülle in Querrichtung.

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3 % der Ursprungslänge beträgt.

Auch die erfindungsgemäße Schlauchhülle kann gerafft werden.

Dies ist besonders überraschend, da wegen der Verdickung im Bereich der Versiegelung infolge des beide Ränder überdeckenden Folienstreifens eigentlich Schwierigkeiten beim Raffen zu erwarten sind. Die Schlauchhülle wird beispielsweise mit dem aus den US-A-3,988,804 und US-A-4,185,358 bekannten Verfahren bzw. der dort beschriebenen Vorrichtung gerafft.

Ein Raffverhältnis von 1 : 70 bis 1 : 80 läßt sich ohne weiteres erreichen.

Es ist auch eine spiralförmige Verdrehung der Hülle und folglich eine Verdrillung der relativ dicken Nahtzone um die Längsachse der Hülle beim Raffvorgang möglich, aber nicht erforderlich. Dies geschieht beispielsweise mit an sich bekannten Raffvorrichtungen, wie sie z. B. in den US-A-2,819,488, US-A-3,619,854, US-A-3,594,857 und US-A-3,766,603 beschrieben sind. Die Anzahl der Windungen pro 10 m Schlauchlänge liegt zweckmäßigerweise zwischen 0,5 und 10 und wird je nach Ausmaß der Verdickung in der Nahtzone und der Breite des Folienstreifens gewählt.

Die gerafften Schläuche werden mit einem Wurstbrät vom Brühwursttyp gefüllt (ca. 20 m/min.), mechanisch abgedreht, bei 70 bis 80 °C gebrüht, geräuchert und mit Wasser abgekühlt.

Man erhält Würste mit gleichmäßiger Form und schälbarer, an der Wurstmasse eng anliegender Hülle.

Sofern die Schlauchhülle z. B. für empfindliche Nahrungsmittel vorgesehen ist, so wird die Bahn oder die Schlauchhülle sterilisiert, wobei man übliche Methoden, wie z. B. Hitze- oder Ozonbehandlung oder Hochfrequenzbestrahlung, anwendet.

Neben bereits genannten Vorteilen ist noch darauf hinzuweisen, daß die Schlauchhüllen der Erfindung sich mit höherer Geschwindigkeit als bisher produzieren lassen : Bei der Herstellung von Bahnen aus regenerierter Cellulose nach dem Viskoseverfahren kann der Spinnprozeß rascher durchgeführt werden, ebenso das Beschichten der Bahnen mit dem wasserunlöslichen Harz und das Bedrucken. Die Hülle zeigt ferner eine gleichmäßige einheitliche koagulierte und regenerierte Schicht aus Cellulose.

Neben Flexodruck ist auch hochwertiger Tiefdruck möglich. Ferner läßt sich der Zuschnitt bzw. die Bahn mit einem Rundumdruck oder als Vorder- und Rückseitendruck bedrucken.

Bei der Verwendung als Wursthülle tritt keine Geschmacksbeeinflussung der Wurstmasse ein. Die Wursthülle und Klebenaht zeigen große Festigkeit gegenüber Dehnungsbelastung und Volumenbeständigkeit beim Füllen mit Wurstmasse, Hantieren und Verarbeiten. Durch den beim Füllen auftretenden Druck und durch die beim Brühen und Abkühlen auftretenden Quell- und Schrumpfkräfte tritt überraschenderweise keine Schädigung der Naht ein, obwohl die Klebstoffschicht nicht vollflächig vorhanden oder porös ist. Die Wursthülle ist auch bei tiefen Temperaturen lagerfähig und läßt sich gut aufschneiden, wobei der Folienstreifen als Aufreißband dienen kann.

Die Erfindung wird anhand der Figuren 1 bis 9 und dem folgenden Beispiel näher erläutert.

Figur 1 zeigt die Herstellung der faserverstärkten Bahn aus regenerierter Cellulose,

Figur 2 zeigt die Beschichtung der faserverstärkten Bahn aus regenerierter Cellulose mit einer Verankerungsschicht

Figuren 3, 4, 7, 8 und 9 zeigen Alternativen zur Herstellung eines Schlauches aus der Bahn,

Figuren 5a, 5b, 5c und 5d zeigen Siegelbereiche des Schlauches queraxial im Schnitt.

Figuren 6a und 6b zeigen die gefüllte Schlauchhülle mit außen bzw. innen liegendem Folienstreifen.

## Beispiel

Eine Bahn 1 aus langfaserigem Hanfpapier mit einer Flachbreite von 235 mm und einem Flächengewicht von 21 g/m$^2$ wird von einer Rolle 2 abgewickelt und nach dem Durchlaufen von Zugwalzen 3 und die Bahnkanten steuernden Walzen 4 mit einem Flachbahngießer 5 beidseitig mit Viskose beschichtet. Die Spaltbreite beträgt beispielsweise 0,8 mm, die Bahngeschwindigkeit 5 m/Min.

Die Bahn 1 passiert danach zur Fällung und Regenerierung Sprühdüsen 6a, 6b und 6c, aus denen Regenerierflüssigkeit auf die mit Viskose versehene Bahn aufgebracht wird. Die aus dem ersten Düsenpaar 6a austretende Regenerierflüssigkeit besteht beispielsweise aus 30 g/l Schwefelsäure, 260 g/l Ammoniumsulfat und 100 g/l Natriumsulfat und hat eine leicht erhöhte Temperatur von etwa 35 bis 50 °C. Der Anteil der Schwefelsäure wird gewöhnlich in den folgenden Düsen 6b und 6c erhöht. Die Bahnbreite wird durch die an den beiden Bahnkanten angreifenden Nadelketten 7 konstant gehalten, so daß die gewöhnlich beim Regenerieren auftretende Schrumpfung in Querrichtung verhindert wird. Die faserverstärkte Bahn aus Cellulosehydrat-Gel durchläuft anschließend die schematisch dargestellten Wasch-, Entschwefelungs- und Weichmachungsbäder 8, wobei sie über Walzen 9 geführt wird. Die Bahn aus Cellulosehydrat-Gel hat nun eine Breite von 210 mm. Eine Vortrocknung der Bahn erfolgt im Trockenteil 10, in dem die Bahn über Trockungswalzen 11 läuft. Der Wassergehalt der Bahn ist beim Verlassen dieser Trockenstufe 80 bis 150 Gew.-%. Danach werden die Bahnkanten von Nadelkluppenketten 12 erfaßt und die Bahn durch einen Spannrahmen 13 und anschließend durch mehrere Etagen eines Trockenfeldes 14 geführt. Im Spannrahmen 13 wird die Bahn auf eine Breite von 252 bis 262 mm in Querrichtung verdehnt und danach — während sie weiterhin auf diese Breite gehalten wird — getrocknet, vorzugsweise bei etwa 80 °C. Die Restfeuchte der auf der Walze 15 aufgewickelten Bahn beträgt etwa 14 Gew.-%, sie zeigt eine Reißfestigkeit in Längsrichtung von 52 N/mm$^2$, in Querrichtung 58 N/mm$^2$ und eine Reißdehnung von

etwa 17,5 % in beiden Richtungen. Mit 16 sind weitere meist zur Umlenkung der Bahn und/oder der Kluppenketten dienende Walzen bezeichnet.

Das Aufbringen der Verankerungsschicht auf die Bahn wird in der Fig. 2 beispielhaft erläutert.

Die von einer Vorratsrolle 18 abgewickelte, doppellagige Bahn 17 wird nach Durchlaufen der Umlenkwalze 19 mit stetiger Geschwindigkeit durch eine Wanne 20 über eine in der Wanne befindliche Umlenkwalze 21 geführt. Mit 22 ist die Beschichtungsflüssigkeit in der Wanne 20 bezeichnet. Die Flüssigkeit besteht z. B. aus einer einprozentigen wäßrigen Lösung eines modifizierten Melaminformaldehyd-Harzes ($^{R}$Accobond der Fa. ACC).

Die auf den Außenseiten die flüssige Beschichtung 24 aufweisende, doppellagige Bahn 23 durchläuft in vertikaler Richtung von unten nach oben den vom Rakel 25 oder von sogenannten Doctor-Walzen gebildeten Spalt, der eine bestimmte Dicke der Beschichtung auf den Oberflächen der Bahn einstellt. Die Bahn wird danach durch den Trockenschacht 26 geführt, in dem die flüssigen Anteile der Beschichtung durch Wärmeeinwirkung, z. B. Heißluft von ca. 115 °C, verdampft werden und sich ein geschlossener Filmüberzug mit einem Flächengewicht von beispielsweise 10 g/m$^2$ bildet. Nach den Umlenkwalzen 27 folgt ein zweiter Trockenschacht 28, der auch zur Rekonditionierung der Bahn, z. B. zum Wiederbefeuchten bis zu einem Wassergehalt von 8 bis 10 Gew.-%, benutzt werden kann. Hierzu wird Wasserdampf gesättigte Luft von 80 bis 98 °C verwendet. Bei der Umlenkwalze 29 erfolgt die Trennung der beiden Lagen, welche auf den Vorratsrollen 30 und 31 aufgewickelt werden.

Anstelle der in der Fig. 2 gezeigten Beschichtung einer doppellagigen Bahn ist auch die einseitige Beschichtung mit üblichen Beschichtungsvorrichtungen möglich.

Aus der mit der Verankerungsschicht versehenen Bahn wird nun ein Schlauch geformt, wie es beispielsweise in Fig. 3, 4, 7, 8 oder 9 dargestellt ist.

In der Fig. 3 wird die faserverstärkte Bahn 32 aus regenerierter Cellulose durch ein Ringsegment 33 geführt und zu einem Schlauch geformt, wobei sich die beiden Ränder in der Führungshülse 34 zu einer Stoßnaht 35 nähern. Das Ringsegment 33 und die Führngshülse 34 dienen zur äußeren Unterstützung der Schlauchbildung, während das im Schlauchinneren vorhandene zylindrische Stützelement 36 den Schlauch von Innen abstützt. Ein Folienstreifen 37, bestehend aus dem gleichen faserverstärkten Material wie die Bahn, wird von der Rolle 38 abgewickelt und über eine ösenförmige Halterung 39 in das Innere des Schlauches geführt, wobei sich die Stoßnaht 35 in der Mitte des Folienstreifens 37 befindet. Auf der Oberfläche des Folienstreifens befindet sich zur Verbindung der beiden Ränder der Bahn eine rauchdurchlässige Klebstoffschicht. Hierzu wurde die Klebstoffschicht z. B. mit einer Nadelwalze kontinuierlich mit durchgehenden feinen Löchern (Durchmesser ca. 0,2 mm, Anzahl 15/cm) versehen. Der Klebstoff kann auch in Form einer Dispersion oder Lösung mittels Siebdruck unter Verwendung beispielsweise einer 40 mesh-Lochschablone und einem Streichrakel auf den Folienstreifen aufgebracht werden, wobei die Klebstoffschicht nach Vertreiben des Lösungs- oder Dispersionsmittels in Form von im Querschnitt kreisförmigen Flächen mit einem Durchmesser von ca. 0,45 mm und einer Höhe von 20 bis 30 $\mu$m vorliegt.

Die Backe 40, die bei Verwendung einer Siegelschicht oder eines Heißschmelzklebers geheizt wird und die z. B. auch die Form einer anpreßbaren Walze aufweisen kann, drückt nun den Folienstreifen 37 gegen die Randzonen der zu einem Schlauch geformten Bahn. Eine gasdurchlässige Klebstoffschicht befindet sich gegebenenfalls auch auf der die Innenseite des Schlauches bildenden Bahnoberfläche. Der Schlauch 41 wird durch das Walzenpaar 42 abgezogen und mit der Rolle 43 aufgewickelt.

Anstelle des Stützelements 36 im Inneren des gebildeten Schlauches kann sich auch Füllgut z. B. Wurstbrät in dem Schlauch befinden, das aus einem Füllrohr einer Füllvorrichtung in dem Maße austritt wie der Schlauch fortbewegt wird. Vorzugsweise mündet das Füllrohr koaxial in das Schlauchinnere ein. Ferner ist es auch möglich, das Stützelement 36 als Füllrohr auszubilden. In diesen Fällen erfolgt die Schlauchbildung in einem Arbeitsgang mit der Herstellung der Würste.

In einer in Fig. 4 gezeigten Alternative wird die faserverstärkte Bahn 32 aus regenerierter Cellulose von der Rolle 44 abgezogen und über Leitrollen 45 und 46 zu einer Formschulter 47 geführt, wo die Schlauchformung stattfindet. Die beiden Ränder der Bahn 32 werden unter Bildung einer Stoßnaht 35 einander genähert. Das zylindrische Stützelement 48 befindet sich im Inneren des Schlauches und ist durch die Öffnungen 49 mit einem Kühlmittel beaufschlagbar. Es zeigt einen Außendurchmesser, der dem Innendurchmesser des gebildeten Schlauches entspricht.

Ein Folienstreifen 37, z. B. aus heißsiegelfähigem Material, wird von der Rolle 38 abgewickelt und über ein ösenförmiges Führungselement 39 in das Innere des Schlauches geführt, wobei sich die Stoßnaht 35 in der Mitte des Folienstreifens 37 befindet.

Die Backe 40 mit einer Länge von beispielsweise 200 mm wird mit 2 bar taktweise aufgepreßt, wobei der Folienstreifen 37 gegen die Randzonen der zu einem Schlauch geformten Bahn gesiegelt wird. Der Folienstreifen hat beispielsweise eine Breite von 10 mm, so daß die Randzonen der Bahn jeweils um etwa 5 mm überdeckt werden.

An der äußeren Oberfläche des Schlauches schieben Transportbänder 50 den Schlauch taktweise um z. B. jeweils 150 mm in vertikaler Richtung nach unten. Der Schlauch passiert Bleche 51, die den Schlauch flachlegen, sowie ein Transportwalzenpaar 42 und wird dann auf der Rolle 43 aufgewickelt. Zur Herstellung einer gasdurchlässigen Siegelnaht wird der Nahtbereich mit einer nicht dargestellten Nadelwalze perforiert, so daß sich die in Fig. 5d gezeigte Struktur ergibt (ohne Klebstoffschicht 54).

Ein Abschnitt des Schlauches wird mit einer üblichen Wurstabfüllvorrichtung mit einem Wurstbrät für Brühwürste bei einem Fülldruck von 0,3 bar gefüllt und verschlossen. Danach wird die Wurst wie üblich geräuchert z. B. 10-60 Minuten im Feuchtrauch bei 70 bis 80 °C, und für weitere 10 Minuten in Wasser von 80 bis 82 °C gebrüht, danach gekühlt und im Kühlraum gelagert.

Eine Dimensionsänderung der Wurst ist weder vor noch nach dem Brühprozeß zu beobachten. Sie zeigte stets pralles Aussehen und behält ihren gleichmäßigen Durchmesser bei. Der Gewichtsverlust nach einwöchiger Lagerung im Kühlraum ist kleiner als 1 %. Nach dem Anschneiden der Wursthülle kann sie mühelos durch längsaxiales Ziehen am eingesiegelten Folienstreifen geöffnet und abgezogen werden, wobei der Folienstreifen als Aufreißband dient. Ferner zeigt die Wurst auch im Nahtbereich eine gleichmäßige Räucherfärbung.

In Fig. 5a sind die zu den längsaxial sich erstreckenden Rändern 57 und 58 nahe Bereiche der Bahn 52 überlappend miteinander verklebt, wobei die Klebstoff enthaltende Schicht 54 sich zwischen den überlappenden Bereichen befindet. Mit 53a und 53b sind die haftvermittelnden Harzschichten auf den Oberflächen der Bahn bezeichnet.

Die Durchlässe 59 in der Klebstoffschicht befinden sich zwischen dem punktförmig strukturierten Klebstoffauftrag.

Die Fig. 5b zeigt eine weitere Ausbildung des in Fig. 5a dargestellen Verklebungsbereichs. Mit 60 sind Perforationen im Bereich der Ränder 57 und 58 bezeichnet, die sich durch die ganze Naht einschließlich der Bahn 52 und der Klebstoffschicht 54 erstrecken.

Der in Fig. 5c dargestellte Nahtbereich besteht aus zwei aneinanderstroßenden Rändern 57 und 58 der Bahn 52. Diese sind mit einem Folienstreifen 37, der beide Ränder 57 und 58 überdeckt, über eine Klebstoff enthaltende Schicht 54 und eine haffvermittelnde Harzschicht 53 verbunden. Mit 59 sind Durchlässe in der Klebstoffschicht 54 bezeichnet, die sich zwischen dem punktförmig strukturierten Klebstoffauftragt befinden.

Die Fig. 5d zeigt eine weitere Ausbildung des in Fig. 5c dargestellten Verklebungsbereichs. Mit 60 sind Perforationen im Bereich der Ränder 57 und 58 und des Folienstreifens 37 bezeichnet, die sich durch die ganze Naht einschließlich der Bahn 52, der haftvermittelnden Harzschicht 53, der Klebstoffschicht 54 und dem Folienstreifen 36 erstrecken.

Die in Fig. 5c und 5d gezeigte Klebstoffschicht 54 ist nicht erforderlich, wenn der Folienstreifen 37 aus heißsiegelfähigem Material besteht und z. B. durch Nadeln rauchdurchlässige Struktur aufweist.

Im allgemeinen ist das aus faserverstärkter regenerierter Cellulose bestehende Material der Bahn und gegebenenfalls des Folienstreifens ausreichend rauchdurchlässig, so daß gewöhnlich die in Fig. 5b und 5d gezeigte Perforation der Bahn bzw. des Folienstreifens nicht erforderlich ist.

Die Dimensionen der in den Figuren 5a bis 5d gezeigten Schichten sind aus Gründen der besseren Übersichtlichkeit nicht maßstabsgetreu wiedergegeben.

In Fig. 6a ist die gefüllte Schlauchhülle 55 mit außenliegendem, in Fig. 6b mit innenliegendem eingeklebtem Folienstreifen 37 dargestellt, der die Stoßnaht 35 im wesentlichen symmetrisch überdeckt. Mit 57 und 58 sind die beiden aneinanderstoßenden Ränder bezeichnet.

In Fig. 7 wird der Schlauch analog zu der in Fig. 4 gezeigten Weise hergestellt. Die Bezugsziffern haben die gleiche Bedeutung. Der Folienstreifen wird in diesem Beispiel allerdings auf die Außenseite des Schlauchs aufgebracht, wozu eine Walze 56 verwendet wird. Zur besseren Kontaktierung der Walze 56 mit den zu verbindenden Flächen ist das als Unterlage dienende rohrförmige Stützelement 48 im Klebebereich mit einer Abflachung 72 versehen. Das Stützelement 48 kann auch als Füllrohr ausgebildet sein, durch welches das Füllgut in den gebildeten Schlauch eingepreßt wird.

Die Fig. 8 zeigt eine Weiterbildung des Verfahrens, wobei der direkte Klebstoffauftrag an der Flachbahn gezeigt wird.

Von der Vorratsrolle 61 wird eine Bahn 62 aus Celluloseregenerat in ein Tiefdruckauftragswerk geführt, das aus einer gerasterten Auftragswalze 65, einem Rakel 64 und einer Gegenwalze 63 besteht. Die Klebstofflösung oder -dispersion wird vom Vorratsbehälter 66 in die Wanne 67 gefördert. Im Trockenkanal 68 wird der streifenförmige Klebstoffauftrag getrocknet. Die Bahn 62 wird mittels Formschablone 69, Stützrohr 36 und Anlegehülse 34 zu einem Schlauch mit überlappter Längsnaht geformt, mit dem Abzugsrollenpaar 42 flachgelegt und zu der Aufwickelvorrichtung 43 transportiert.

Aus der Fig. 9 ist eine Alternative für den Verfahrensablauf der Schlauchformung und Verklebung der Randbereiche mit einem Haftklebstoff ersichtlich. Die von einer Wickelrolle 44 abgezogene Bahn 32 und das von einer Wickelrolle 38 abgezogene und im Randbereich der Bahn 32 mit der Bahn 32 verklebte Klebeband 37 durchlaufen eine Formschablone 69, im Schnitt in Fig. 9a gezeigt, und eine Überlappungshilfe 70. Danach wird der Papierträger 71 vom Klebeband 37 abgezogen und der innere Randbereich der jetzt schlauchförmigen Bahn 32 mit der nun freien Oberfläche der Haftklebstoffschicht 54 verklebt, wobei die Bahn 32 das schematisch dargestellte Stützrohr 36 mit Anlegehülse 34 durchläuft.

**Patentansprüche**

1. Aus blatt- oder bahnförmigem, rechteckigem Folienzuschnitt oder endloser Folienbahn (52), der bzw. die um die Längsachse gebogen ist und dessen bzw. deren längsaxial sich erstreckenden

Randbereiche mit einer Klebenaht verbunden sind, bestehende Schlauchhülle (55) für Lebensmittel, insbesondere Wurstwaren, wobei die Schlauchhülle zumindest im Bereich der Klebenaht eine Schicht (53) aufweist, die ein im wesentlichen wasserunlösliches haftvermittelndes Harz enthält, dadurch gekennzeichnet, daß der Folienzuschnitt bzw. Folienbahn (52) aus faserverstärkter regenerierter Cellulose besteht, die im nassen wiederangefeuchteten Zustand in Bahnlängsrichtung eine Reißfestigkeit von 15 bis 30 N/mm$^2$ und eine Reißdehnung von 30 bis 50 % und in Bahnquerrichtung eine Reißfestigkeit von 15 bis 35 N/mm$^2$ und eine Reißdehnung von 30 bis 50 % aufweist, wobei die Reißfestigkeit in Bahnquerrichtung gleich oder größer ist als die Reißfestigkeit in Bahnlängsrichtung, und daß die längsaxial sich erstreckenden Ränder durch eine einen Klebstoff enthaltende rauchdurchlässige Schicht (54) miteinander verbunden sind, wobei diese rauchdurchlässige Schicht zur Verbesserung der Rauchdurchlässigkeit Unterbrechungen und/oder Durchlässe (59), z. B. in Form von Poren, Öffnungen, Ausnehmungen oder Perforationen (60), aufweist und/oder ein flächenhaftes textiles Gebilde, einen Schwammstoff, Schaumstoff, eine mikroporöse Folie oder Membran enthält.

2. Schlauchhülle nach Anspruch 1, dadurch gekennzeichnet, daß den längsaxial sich erstreckenden Rändern (57, 58) nahe Bereiche des Zuschnitts bzw. der Bahn (52) überlappend miteinander verklebt sind, wobei die Klebstoff enthaltende Schicht (54) sich zwischen den sich überlappenden Bereichen befindet.

3. Schlauchhülle nach Anspruch 1, dadurch gekennzeichnet, daß die längsaxial sich erstreckenden Ränder (57, 58) aneinander stoßen und mit längsaxial sich erstreckenden, den beiden Rändern (57, 58) nahen Bereiche überdeckenden Folienstreifen (37) auf der Außenseite und/oder Innenseite der Schlauchhülle verbunden sind, wobei die Klebstoff enthaltende Schicht (54) sich zwischen dem (den) Folienstreifen (37) und den randnahen Bereichen und die haftvermittelnde Schicht (53) sich jeweils zwischen Klebstoff und Bahn und gegebenenfalls Folienstreifen befindet und wobei der Folienstreifen (37) aus rauchdurchlässigem Material besteht und/oder rauchdurchlässige Struktur, z. B. in Form von Öffnungen, Unterbrechungen, Durchlässen (59), Ausnehmungen, Poren und Perforationen (60) aufweist.

4. Schlauchhülle nach Anspruch 2, dadurch gekennzeichnet, daß sich zwischen den überlappenden Bereichen ein längsaxial sich erstreckender rauchdurchlässiger Folienstreifen (37) befindet, der auf beiden Seiten eine Klebstoffschicht (54) aufweist.

5. Schlauchhülle nach einem der Ansprüche 3 oder 4, dadurch gekennzeichnet, daß der Folienstreifen (37) aus faserverstärkter regeneriertert Cellulose besteht, dessen Reißfeistigkeit und Reißdehnung in dem für die Folienbahn angegebenen Bereich liegt.

6. Hülle nach einem der Ansprüche 1 bis 5, dadurch gekennzeichnet, daß das Bahnmaterial in nassem Zustand eine Reißfestigkeit in Längsrichtung von 20 bis 30 N/mm$^2$ und in Querrichtung von 25 bis 35 N/mm$^2$ aufweist, wobei die Reißfestigkeit in Querrichtung größer ist als in Längsrichtung.

7. Hülle nach einem der Ansprüche 1 bis 6, dadurch gekennzeichnet, daß das Bahnmaterial in nassem Zustand eine Reißdehnung in Längsrichtung und in Querrichtung von 30 bis 40 % zeigt.

8. Hülle nach einem der Ansprüche 1 bis 7, dadurch gekennzeichnet, daß das Bahnmaterial in trockenem Zustand bei einer Restfeuchte von 8 bis 10 Gew.-% und mit einem Gehalt von 20 bis 24 Gew.-% Glycerin eine Reißfestigkeit in Längsrichtung von 50 bis 70, insbesondere 55 bis 65 N/mm$^2$, und in Querrichtung von 50 bis 75, insbesondere 65 bis 75 N/mm$^2$ besitzt, wobei die Reißfestigkeit in Querrichtung gleich, vorzugsweise größer ist als in Längsrichtung.

9. Hülle nach einem der Ansprüche 1 bis 8, dadurch gekennzeichnet, daß das Bahnmaterial im trockenen Zustand bei einer Restfeuchte von 8 bis 10 Gew.-% und mit einem Gehalt von 20 bis 24 Gew.-% Glycerin eine Reißdehnung von 8 bis 19, insbesondere 8 bis 12 % zeigt.

10. Schlauchhülle nach einem der Ansprüche 1 bis 9, dadurch gekennzeichnet, daß das wasserunlösliche haftvermittelnde Harz auf der Bahnoberfläche und gegebenenfalls auf der (den) Oberfläche(n) des Folienstreifens ein gehärtetes kationisches, hitzehärtbares Harz, insbesondere ein Harnstoff-Aldehyd-, Melamin-Aldehyd-, Phenol-Aldehyd-Harz oder ein Kondensationsprodukt von Polyamidpolyamin, aliphatischem Polyamin oder Polyamid mit bifunktionellen Halohydrinen oder deren Derivaten wie Epichlorhydrin, enthält oder ist.

11. Schlauchhülle nach einem der Ansprüche 1 bis 10, dadurch gekennzeichnet, daß der Klebstoff ein Stoffsystem ist, das ohne chemische Reaktion abbindet.

12. Schlauchhülle nach Anspruch 11, dadurch gekennzeichnet, daß der Klebstoff ein Schmelzklebstoff, insbesondere auf Basis eines Polyesters, ist.

13. Schlauchhülle nach Anspruch 11, dadurch gekennzeichnet, daß der Klebstoff eine Siegelschicht aus thermoplastischem Harz ist, insbesondere ein Vinyliden-Gruppen enthaltendes Polymeres, das mit dem haftvermittelnden Harz verankert ist.

14. Schlauchhülle nach Anspruch 11, dadurch gekennzeichnet, daß der Klebstoff ein Haftklebstoff ist, der als Basisharz insbesondere einen Polyacrylsäureester, Polymethacrylsäureester oder ein Harz auf Basis eines Copolymerisats mit Acrylsäureester- und Acrylnitril-Comonomeren, insbesondere ein Homo- oder Copolymerisat von Acrylsäurebutylester und/oder Acrylsäure-2-äthylhexylester, enthält, wobei der Haftklebstoff mit dem haftvermittelnden Harz verankert ist.

15. Schlauchhülle nach einem der Ansprüche 11 bis 14, dadurch gekennzeichnet, daß der Klebstoff thermisch und/oder chemisch vernetzbare Harze enthält.

16. Schlauchhülle nach Anspruch 15, dadurch gekennzeichnet, daß der Klebstoff ein Copolymerisat mit reaktiven Comonomeren enthält.

17. Schlauchhülle nach Anspruch 16, dadurch gekennzeichnet, daß der Klebstoff ein Harz auf Basis eines carboxylgruppenhaltigen Acrylsäureestercopolymerisats enthält.

18. Schlauchhülle nach einem Ansprüche 1 bis 17, dadurch gekennzeichnet, daß sie gerafft ist, wobei der Verklebungsbereich gegebenenfalls spiralförmig um die Längsachse der gerafften Schlauchhülle angeordnet ist.

19. Verfahren zur Herstellung der Schlauchhülle nach einem der Ansprüche 1 bis 18, wobei man einen blatt- oder bahnförmigen Zuschnitt oder eine endlose Bahn der bzw. die aus Viskose hergestellt ist und aus faserverstärkter regenerierter Cellulose besteht, um die Längsachse biegt und zu einem Schlauch formt und die beiden längsaxial sich erstreckenden Randbereiche miteinander verbindet, wobei zumindest im Verbindungsbereich eine haftvermittelnde Schicht aufgetragen worden ist, dadurch gekennzeichnet, daß man eine Faserbahn mit Viskose beschichtet, die Viskose koaguliert, zu Cellulosehydrat-Gel regeneriert, durch Waschen von Säuren und Salzen befreit und trocknet, wobei man die Faserbahn zumindest während des Koagulierens der Viskose und/oder der Regenerierung zu Cellulosehydrat-Gel an den Rändern festhält, so daß ein Schrumpfen der Bahn verhindert wird, und die Bahn während des Trocknens um 5 bis 15 % in Querrichtung dehnt, bezogen auf die Breite der Faserbahn vor der Beschichtung mit Viskose, und daß man die Randbereiche überlappend oder auf Stoß angeordnet mit einem beide Randbereiche überdeckenden rauchdurchlässigen Folienstreifen verklebt, wobei man vor, während oder nach der Schlauchformung auf die zu verklebenden Flächen des Zuschnitts bzw. der Bahn und/oder des Folienstreifens eine Klebstoff enthaltende Lösung, Dispersion oder Schmelze aufbringt, gegebenenfalls das Lösungs- bzw. Dispergiermittel entfernt, und die Verklebungsnaht bildet, wobei man zur Verbesserung der Rauchdurchlässigkeit vor, während oder nach dem Bilden der Verklebungsnaht die Klebstoff enthaltende Schicht, die sich auf der einen oder auf beiden längsaxial sich erstreckenden Randzonen des Zuschnitts oder der Bahn und/oder auf dem einseitig oder doppelseitig klebenden Folienstreifen befindet, gegebenenfalls auch eine oder beide Randzonen und/oder den Folienstreifen, mit Durchlässen, z. B. in Form von Öffnungen, Poren, Ausnehmungen oder Perforationen, versieht.

20. Verfahren nach Anspruch 19, dadurch gekennzeichnet, daß man beide überlappenden Randbereiche der Schlauchhülle mit einem zwischen den überlappenden Randbereichen angeordneten rauchdurchlässigen Folienstreifen verklebt, welcher beidseitig eine einen Klebstoff enthaltende Schicht aufweist, wobei man diesen doppelseitig klebenden Folienstreifen zunächst mit seiner ersten Oberfläche mit einer der beiden axial sich erstreckenden Randzonen des Zuschnitts bzw. der Bahn verklebt und danach unter Bildung der Schlauchform die zweite klebende Oberfläche des Folienstreifens mit der anderen axial sich erstreckenden Randzone des Zuschnitts bzw. der Bahn verklebt.

21. Verfahren nach einem der Ansprüche 19 oder 20, dadurch gekennzeichnet, daß die Öffnungen und/oder Durchlässe in der Klebstoff enthaltenden Schicht vor, während und/oder nach dem Aufbringen dieser Schicht auf die Randzone(n) des Zuschnitts oder der Bahn oder auf den einseitig oder doppelseitig klebenden Folienstreifen, gegebenenfalls gleichzeitig mit der Herstellung der Durchlässe in den Randzonen und im Folienstreifen, erzeugt werden.

22. Verfahren nach einem der Ansprüche 19 bis 21, dadurch gekennzeichnet, daß man zur Verbesserung der Rauchdurchlässigkeit die Klebstoff enthaltende Lösung, Dispersion oder Schmelze mit Unterbrechungen und/oder Ausnehmungen, z. B. in Streifen-, Punkt- oder Rautenform, auf die zu verklebenden Flächen des Zuschnitts oder der Bahn und/oder Fläche des die beiden Randbereiche überlappenden Folienstreifen oder Flächen des zwischen den überlappenden Randbereichen angeordneten Folienstreifens, z. B. im Siebdruck- oder Tiefdruckverfahren, aufbringt.

23. Verfahren nach einem der Ansprüche 19 bis 22, dadurch gekennzeichnet, daß man in den Schlauch während oder unmittelbar nach der Herstellung der Naht pastöses Füllgut, insbesondere Wurstbrät, einfüllt.

**Claims**

1. A tubular casing for foodstuffs, in particular sausages, comprising a sheet-like or web-like, rectangular piece of film or a continuous web of film (52), which is curved around the longitudinal axis and the edge regions of which, running parallel to the longitudinal axis, are bonded by a glued seam, the tubular casing having, at least in the region of the glued seam, a layer (53) which contains an essentially water-insoluble adhesion-promoting resin, wherein the piece of film or web of film (52) is composed of fiber-reinforced regenerated cellulose which, in the wet remoistened state has, in the longitudinal direction of the web, a breaking strength of 15 to 30 $N/mm^2$ and an elongation at break of 30 to 50 % and, in the transverse direction of the web, a breaking strength of 15 to 35 $N/mm^2$ and an elongation at break of 30 to 50 %, the breaking strength in the transverse direction of the web being equal to or greater than the breaking strength in the longitudinal direction of the web, and wherein the edges running parallel to the longitudinal axis are bonded to one another by a layer (54) which contains an adhesive and is permeable to smoke and which, in order to improve the permeability to smoke, has interruptions and/or passages (59), for example in the form of pores, orifices, gaps or perforations (60) and/or contains a sheet-like textile structure, a sponge material, a foam, a microporous sheet or a membrane.

2. A tubular casing as claimed in claim 1, wherein the regions of the piece or web (52), which are

close to the edges (57, 58) running parallel to the longitudinal axis, are glued together in overlapping fashion, the layer (54) which contains the adhesive being located between the overlapping regions.

3. A tubular casing as claimed in claim 1, wherein the edges (57, 58) running parallel to the longitudinal axis meet and are bonded, on the outside and/or inside of the tubular casing, by film strips (37) which run parallel to the longitudinal axis and cover the two regions close to the edges (57, 58), the layer (54) which contains the adhesive being located between the film strip or strips (37) and the regions close to the edges, and the adhesion-promoting layer (53) being located in each case between the adhesive and the web, and, if appropriate, the film strip, and the film strip (57) being composed of a material which is permeable to smoke and/or having a structure which is permeable to smoke, for example in the form of orifices, interruptions, passages (59), gaps, pores and perforations (60).

4. A tubular casing as claimed in claim 2, wherein a film strip (37) which runs parallel to the longitudinal axis, is permeable to smoke and has an adhesive layer (54) on both sides is located between the overlapping regions.

5. Tubular casing as claimed in claim 3 or 4, wherein the film strip is composed of fiber-reinforced regenerated cellulose, the breaking strength and elongation at break of which are within the range indicated for the film web.

6. A casing as claimed in any of claims 1 to 5, wherein the web material has, in the wet state, a breaking strength of 20 to 30 N/mm$^2$ in the longitudinal direction and a breaking strength of 25 to 35 N/mm$^2$ in the transverse direction, the breaking strength being greater in the transverse direction than in the longitudinal direction.

7. A casing as claimed in any of claims 1 to 6, wherein the web material, in the wet state, has elongations at break of 30 to 40 % in the longitudinal and transverse directions.

8. A casing as claimed in any of claims 1 to 7, wherein the web material, in the dry state at a residual moisture content of 8 to 10 % by weight and with a content of 20 to 24 % by weight of glycerol, has, in the longitudinal direction, a breaking strength of 50 to 70, in particular 55 to 65, N/mm$^2$ and, in the transverse direction, a breaking strength of 50 to 75, particularly 65 to 75, N/mm$^2$, the breaking strength in the transverse direction being equal to or preferably greater than that in the longitudinal direction.

9. A casing as claimed in any of claims 1 to 8, wherein the web material, in the dry state at a residual moisture content of 8 to 10 % by weight and with a content of 20 to 24 % by weight of glycerol, has an elongation at break of 8 to 19 and in particular 8 to 12 %.

10. A tubular casing as claimed in any of claims 1 to 9, wherein the water-insoluble adhesion-promoting resin on the surface of the web and, if appropriate, on the surface or surfaces of the film strip contains or is a cured cationic thermosetting resin, in particular a urea/aldehyde, melamine/aldehyde or phenol/aldehyde resin or a condensation product of a polyamide-polyamine, aliphatic polyamine or polyamide and bifunctional halohydrin or derivatives thereof, such as epichlorohydrin.

11. A tubular casing as claimed in any of claims 1 to 10, wherein the adhesive is a material system which sets without a chemical reaction.

12. A tubular casing as claimed in claim 11, wherein the adhesive is a hot-melt adhesive based, in particular, on a polyester.

13. A tubular casing as claimed in claim 11, wherein the adhesive is a sealing layer of a thermoplastic resin, in particular a polymer containing vinylidene groups, which is anchored with the adhesion-promoting resin.

14. A tubular casing as claimed in claim 11, wherein the adhesive is a pressure-sensitive adhesive which, as the base resin, contains especially a polyacrylate or polymethacrylate or a resin based on a copolymer with acrylate and acrylonitrile comonomers, in particular a homopolymer or copolymer of butyl acrylate and/or 2-ethylhexyl acrylate, the pressure-sensitive adhesive being anchored with the adhesion-promoting resin.

15. A tubular casing as claimed in any of claims 11 to 14, wherein the adhesive contains thermally and/or chemically crosslinkable resins.

16. A tubular casing as claimed in claim 15, wherein the adhesive contains a copolymer with reactive comonomers.

17. A tubular casing as claimed in claim 16, wherein the adhesive is a resin based on an acrylate copolymer containing carboxyl groups.

18. A tubular casing as claimed in any of claims 1 to 17, which is shirred, the gluing region being arranged, helically if appropriate, around the longitudinal axis of the shirred tubular casing.

19. A process for the manufacture of a tubular casing as claimed in any of claims 1 to 18, in which a sheet-like or web-like piece or a continuous web, produced from viscose and composed of fiber-reinforced regenerated cellulose, is curved around the longitudinal axis and shaped to form a tube, and the two edge regions running parallel to the longitudinal axis are bonded together, an adhesion-promoting layer having been applied at least in the bonding region, wherein a fiber web is coated with viscose, the viscose is coagulated and regenerated to give a cellulose hydrate gel, acids and salts are removed by washing and the product is dried, the fiber web being held by the edges, at least during the coagulation of the viscose and/or the regeneration to give cellulose hydrate gel, so that shrinking of the web is prevented, and, during the drying, the web is stretched by 5 to 15 % in the transverse direction, relative to the width of the fiber web before the coating with viscose, and wherein the edge regions, in an

overlapping or butting arrangement, are glued with a smoke-permeable film strip which covers both the edge regions, and before, during or after the formation of the tube, a solution, dispersion or melt containing an adhesive is applied to the surfaces, which are to be glued, of the piece or web and/or the film strip, if appropriate the solvent or dispersing agent is removed, and the glued seam is formed, and, in order to improve the permeability to smoke, the layer which contains the adhesive and which is located on one or both of the edge zones of the piece or web, which runs parallel to the longitudinal axis, and/or on the film strip which is tacky on one or both sides, and if appropriate also one or both edge zones and/or the film strip, are provided, before, during or after the formation of the glued seam, with passages, for example in the form of orifices pores, gaps or perforations.

20. A process as claimed in claim 19, wherein the two overlapping edge regions of the tubular casing are glued by means of a smoke-permeable film strip which is located between the overlapping edge regions and which has, on both sides, a layer containing an adhesive, this film strip, which is tacky on both sides, first being glued with its first surface to one of the two axially running edge zones of the piece or web and then the second tacky surface of the film strip being glued to the other axially running edge zone of the piece or web, thus producing the tubular form.

21. A process as claimed in claim 19 or 20, wherein the orifices and/or passages in the adhesive-containing layer are produced before, during and/or after the application of this layer to the edge zone(s) of the piece or web or to the film strip which is tacky on one or both sides, if appropriate simultaneously with the production of the passages in the edge zones and in the film strip.

22. A process as claimed in any of claims 19 to 21, wherein, in order to improve the permeability to smoke, the solution, dispersion or melt containing adhesive is applied, with interruptions and/or gaps, for example in the form of stripes, dots or lozenges, for example by the screen-printing process or gravure-printing process, to the surfaces, which are to be glued, of the piece or web and/or the surface of the film strip overlapping the two edge regions or the surfaces of the film strip located between the overlapping edge regions.

23. A process as claimed in any of claims 19 to 22, wherein the tube is filled, during or immediately after making the seam, with a pasty filling, in particular sausage meat.

**Revendications**

1. Gaine tubulaire (55) pour aliments, en particulier de la charcuterie, faite d'un flan rectangulaire en forme de feuille ou de bande ou d'une bande sans fin (52) cintré(e) autour de l'axe longitudinal et dont les parties latérales parallèles à l'axe longitudinal sont fixées l'une à l'autre par un cordon de collage, la gaine tubulaire (55) présentant au moins dans la zone du cordon de collage, une couche (53) contenant une résine d'accrochage pratiquement insoluble dans l'eau, caractérisée en ce que le flan ou la bande (52) est en cellulose régénérée et renforcée de fibres qui, à l'état humide et réhumidifié, présente dans la direction longitudinale de la bande une résistance à la traction de 15 à 30 $N/mm^2$ et un allongement à la rupture de 30 à 50 % et, dans la direction transversale, une résistance à la traction de 15 à 35 $N/mm^2$ et un allongement à la rupture de 30 à 50 %, la résistance à la traction dans la direction transversale étant égale ou supérieure à la résistance à la traction dans la direction longitudinale, et en ce que les bords longitudinaux sont fixés l'un à l'autre par une couche (54) perméable à la fumée et comportant une colle, cette couche perméable à la fumée présentant, pour améliorer cette perméabilité, des interruptions ou des passages (59), ou les deux à la fois, ces passages pouvant être par exemple des pores, des ouvertures des échancrures ou des perforations (60) ou bien comportant une structure textile plane ou gauche, une matière spongieuse, une mousse, une feuille microporeuse ou une membrane, ou ces deux choses.

2. Gaine tubulaire selon la revendication 1, caractérisée en ce que des parties du flan ou de la bande (52) proches des bords (57, 58) longitudinaux sont collées l'une à l'autre en se chevauchant, la couche (54) comportant de la colle se trouvant entre les parties qui se chevauchent.

3. Gaine tubulaire selon la revendication 1, caractérisée en ce que les bords longitudinaux (57, 58) viennent bout à bout et sont rendus solidaires de rubans de matière plastique (37) longitudinaux qui recouvrent les zones proches des deux bords (57, 58) du côté extérieur ou intérieur, ou les deux, de la gaine tubulaire, la couche (54) comportant de la colle se trouvant entre le ou les ruban(s) (37) et les zones proches des bords et la couche d'accrochage (53) se trouvant entre la colle et la bande et, le cas échéant, le ruban de plastique, et le ruban de plastique (37) étant fait d'une matière perméable à la fumée ou présentant une structure perméable à la fumée, par exemple grâce à des ouvertures, des interruptions, des passages (59), des échancrures, des pores et des perforations (60), ou les deux.

4. Gaine tubulaire selon la revendication 2, caractérisée en ce qu'un ruban de plastique (37) longitudinal, perméable à la fumée, se trouve entre les parties chevauchantes, ce ruban (37) possédant une couche (54) de colle des deux côtés.

5. Gaine tubulaire selon la revendication 3 ou 4, caractérisée en ce que le ruban de plastique (37) est en cellulose régénérée et renforcée de fibres, dont la résistance à la traction et l'allongement à la rupture sont dans le domaine indiqué pour la bande de plastique.

6. Gaine selon l'une des revendications 1 à 5, caractérisée en ce que la matière constituant la bande

a, à l'état mouillé, une résistance à la traction longitudinale de 20 à 30 N/mm$^2$ et une résistance transversale de 25 à 35 N/mm$^2$, la résistance à la traction transversale étant supérieure à la résistance à la traction longitudinale.

7. Gaine selon l'une des revendications 1 à 6, caractérisée en ce que, à l'état mouillé, la matière constituant la bande a un allongement à la rupture de 30 à 40 % dans les directions longitudinale et transversale.

8. Gaine selon l'une des revendications 1 à 7, caractérisée en ce que la matière constituant la bande présente à sec, avec une humidité résiduelle de 8 à 10 % en poids et une teneur en glycérine de 20 à 24 % en poids, une résistance à la traction de 50 à 70 N/mm$^2$, en particulier 55 à 65 N/mm$^2$, dans la direction longitudinale, et de 50 à 75, en particulier 65 à 75 N/mm$^2$, dans la direction transversale, la résistance à la traction dans la direction transversale étant aussi grande que dans la direction longitudinale de préférence supérieure.

9. Gaine selon l'une des revendications 1 à 8, caractérisée en ce que la matière constituant la bande présente à sec, pour une humidité résiduelle de 8 à 10 % en poids et avec une teneur en glycérine de 20 à 24 % en poids, un allongement à la rupture de 8 à 19 %, en particulier 8 à 12 %.

10. Gaine tubulaire selon l'une des revendications 1 à 9, caractérisée en ce que la résine d'accrochage insoluble dans l'eau, appliquée sur la surface de la bande et, le cas échéant, sur la ou les surfaces du ruban de matière plastique, est, ou contient, une résine cationique thermodurcissable durcie, en particulier une résine urée-aldéhyde, mélamine-aldéhyde ou phénol-aldéhyde ou un produit de condensation de polyamide polyamine, de polyamine aliphatique ou de polyamide comprenant des halohydrines bifonctionnelles ou leurs dérivés tels que l'épichlorydrine.

11. Gaine tubulaire selon l'une des revendications 1 à 10, caractérisée en ce que la colle est un système de matières qui fait prise sans réaction chimique.

12. Gaine tubulaire selon la revendication 11, caractérisée en ce que la colle est une colle fusible en particulier à base de polyester.

13. Gaine tubulaire selon la revendication 11, caractérisée en ce que la colle est une couche de soudage en résine thermoplastique, en particulier une résine polymère comportant des groupes vinylidènes et ancrée avec la résine d'accrochage.

14. Gaine tubulaire selon la revendication 11, caractérisée en ce que la colle est une colle sensible à la pression comportant comme résine de base, en particulier, un ester d'acide polyacrylique ou polyméthacrylique ou une résine à base d'un copolymérisat, comportant des comonomères d'ester d'acide acrylique et d'acrylonitrile, en particulier un homopolymérisat ou un copolymérisat d'ester butylique d'acide acrylique et/ou un ester d'acide acrylique-2-éthylhexyle, la colle sensible à la pression étant ancrée avec la résine d'accrochage.

15. Gaine tubulaire selon l'une des revendications 11 à 14, caractérisée en ce que la colle comporte des résines pouvant être réticulées thermiquement ou chimiquement, ou les deux.

16. Gaine tubulaire selon la revendication 15, caractérisée en ce que la colle comporte un copolymérisat dans lequel figurent des comonomères réactifs.

17. Gaine tubulaire selon la revendication 16, caractérisée en ce que la colle comporte une résine dont la base est un copolymérisat d'ester d'acide acrylique comportant des groupes carboxyles.

18. Gaine tubulaire selon l'une des revendications 1 à 17, caractérisée en ce qu'elle est contractée, la zone de collage étant le cas échéant disposée en spirale autour de l'axe longitudinal de l'enveloppe tubulaire contractée.

19. Procédé de fabrication de la gaine tubulaire conforme à l'une des revendications 1 à 18, selon lequel on cintre autour de l'axe longitudinal, formant un tube, un flan en forme de feuille ou de bande, ou une bande sans fin fabriqué(e) à partir de viscose et constitué(e) par la cellulose régénérée et renforcée de fibres, en rendant solidaires l'une de l'autre les deux zones marginales longitudinales, une couche d'accrochage ayant été appliquée au moins dans la zone de fixation, caractérisé en ce que l'on enduit de viscose une bande de fibres, que l'on fait coaguler la viscose, qu'on la régénère pour obtenir un gel d'hydrate de cellulose, qu'on la débarrasse par lavage des acides et des sels et qu'on la fait sécher en maintenant la bande de fibres par les bords tout au moins pendant la coagulation de la viscose ou la régénération donnant un gel d'hydrate de cellulose, ou les deux, de sorte qu'on empêche la bande de rétrécir, et que, pendant le séchage, on étire la bande de 5 à 15 % dans la direction transversale, par rapport à sa largeur avant qu'elle n'ait été enduite de viscose, et en ce qu'on colle les parties marginales en les faisant se chevaucher ou en les mettant bout à bout, avec un ruban de plastique perméable à la fumée qui recouvre les deux parties marginales, en appliquant avant, pendant ou après la formation du tube, sur les surfaces à coller du flan ou de la bande et ou du ruban de plastique, une solution, une dispersion ou une masse fondue, contenant de la colle, enlevant le cas échéant le solvant ou l'agent dispersant et formant le cordon de collage, en pourvoyant de passages, par exemple sous la forme d'ouvertures, de portes, d'échancrures ou de perforations, afin d'améliorer la perméabilité à la fumée, avant, pendant ou après la formation du cordon de collage, la couche comportant de la colle et qui se trouve sur l'une des deux zones marginales longitudinale, ou sur les deux, du flan ou de la bande, ou sur le ruban de plastique qui colle d'un côté ou des deux côtés ou à la fois sur ces zones marginales et sur ce ruban, et en pourvoyant de passages, le cas échéant, également une des deux zones marginales ou les deux, ou le ruban de plastique, ou à la fois ces zones et ce ruban.

20. Procédé selon la revendication 19, caractérisé en ce que l'on colle les deux zones marginales de la gaine tubulaire qui se chevauchent avec un ruban de plastique, perméable à la fumée, que l'on place entre les zones marginales chevauchantes, ce ruban ayant sur ses deux faces une couche comportant une colle, et l'on colle tout d'abord ce ruban de plastique, collant des deux côtés, par sa première face, sur l'une des deux zones marginales axiales du flan ou de la bande, après quoi l'on colle la deuxième surface collante du ruban de plastique, en formant le tube, à l'autre zone marginale axiale du flan ou de la bande.

21. Procédé selon l'une des revendications 19 et 20, caractérisé en ce que les ouvertures et ou les passages dans la couche comportant la colle, sont réalisés avant, pendant et ou après l'application de cette couche sur le (les) zone(s) marginale(s) du flan ou de la bande ou sur le ruban de plastique collant d'un côté ou des deux côtés, le cas échéant en même temps que la réalisation des passages dans les zones marginales et dans le ruban de plastique.

22. Procédé selon l'une des revendications 19 à 21, caractérisé en ce que pour améliorer la perméabilité à la fumée, on applique la solution, dispersion ou masse fondue contenant de la colle avec des interruptions et/ou des échancrures, par exemple en forme de bandes, de points ou de losanges, sur les surfaces à coller du flan ou de la bande et ou sur la surface du ruban de plastique chevauchant les deux zones marginales, ou sur les surfaces du ruban plastique placé entre les zones marginales qui se chevauchent en utilisant pour l'application, par exemple la sérigraphie ou l'héliogravure.

23. Procédé selon l'une des revendications 19 à 22, caractérisé en ce que, pendant la réalisation du cordon ou immédiatement après, on remplit le tube d'un produit pâteux, en particulier de la chair à saucisse.

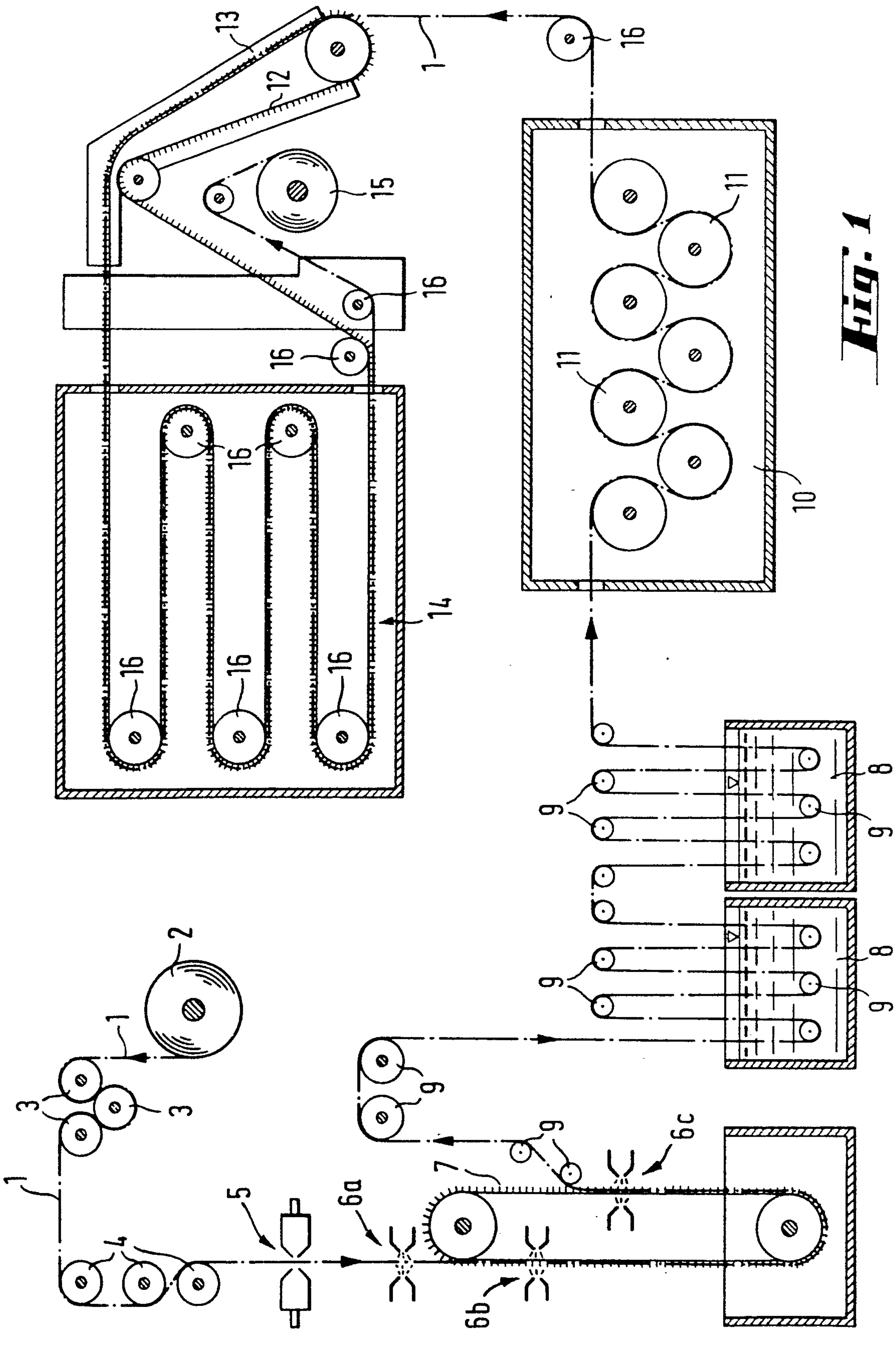


Fig. 1

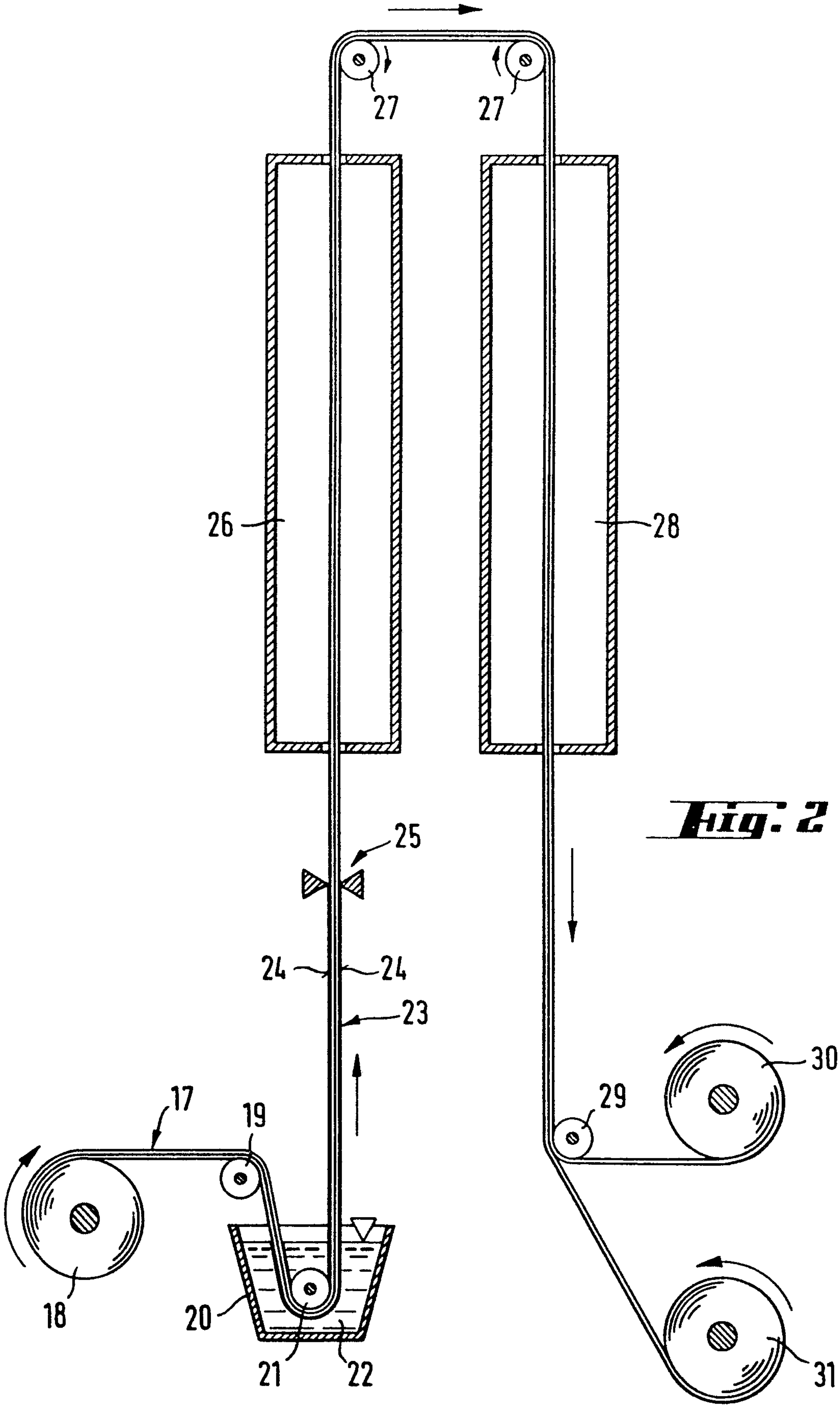


Fig: 2

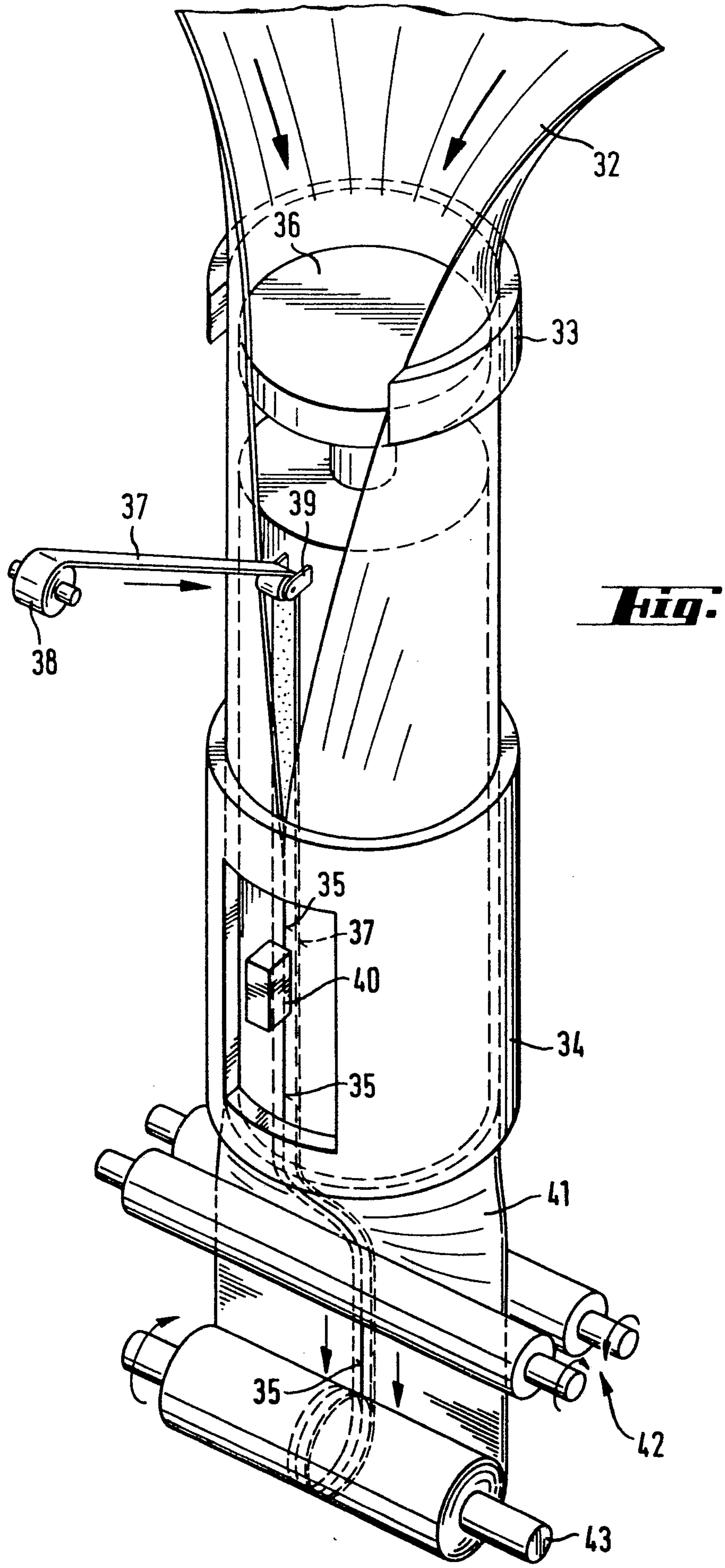


Fig. 3

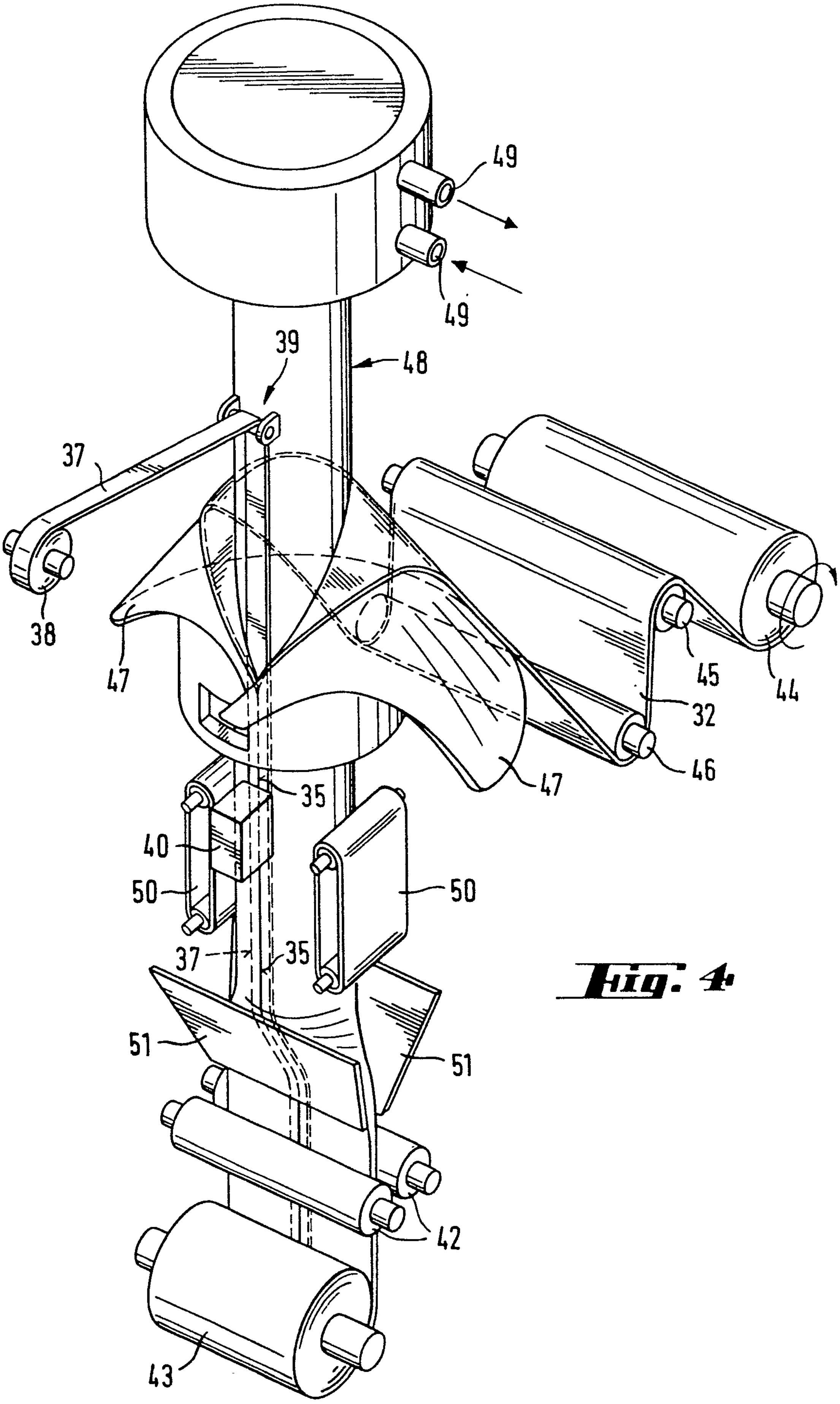


Fig. 4

Fig. 5a

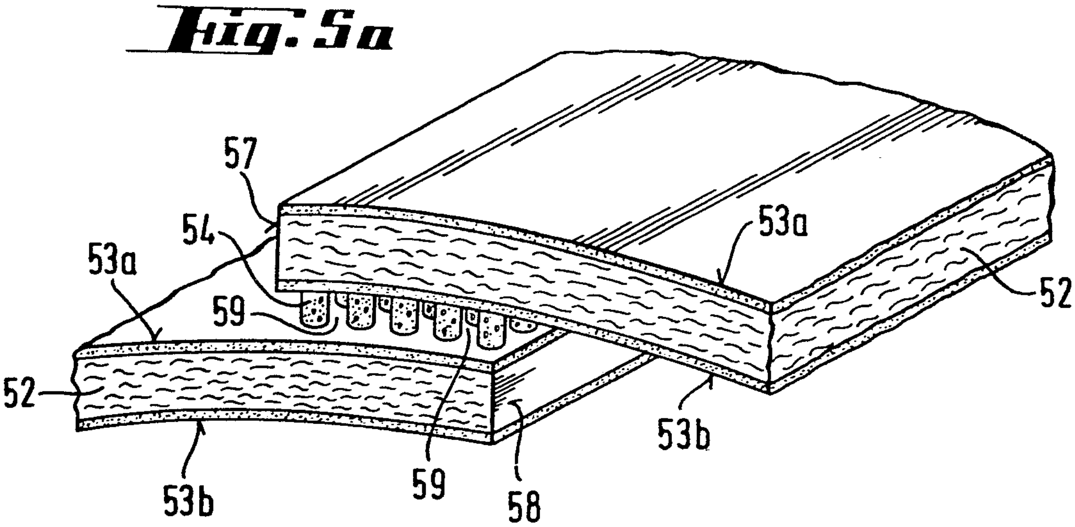
57
54
53a
59
52
53a
52
53b
53b
59
58

Fig. 5b

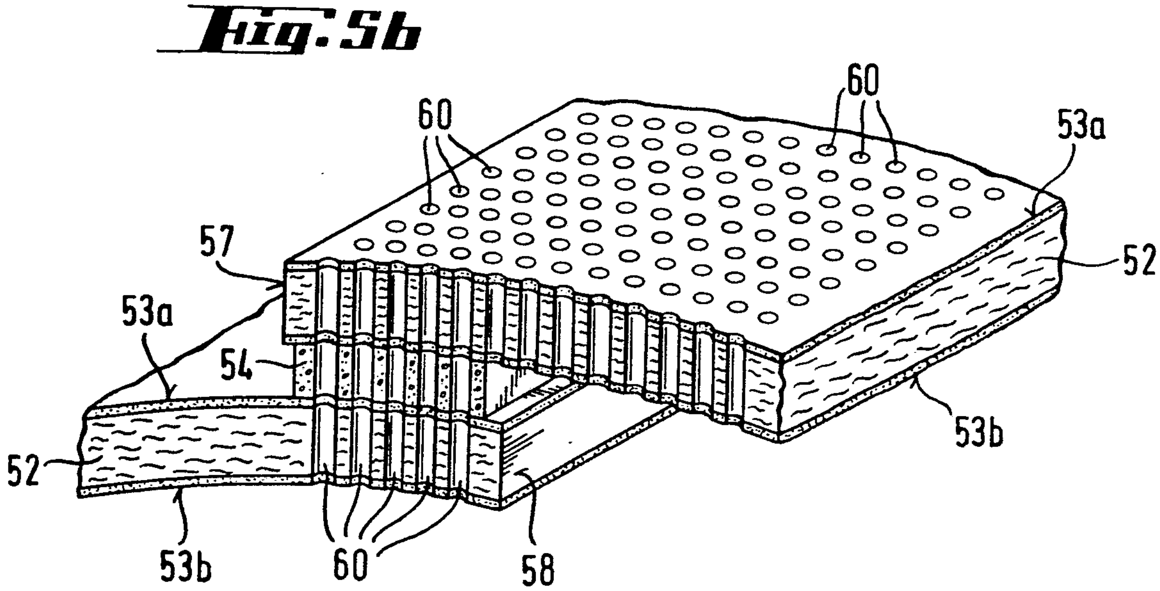
60
60
53a
57
52
53a
54
52
53b
53b
60
58

Fig. 5c

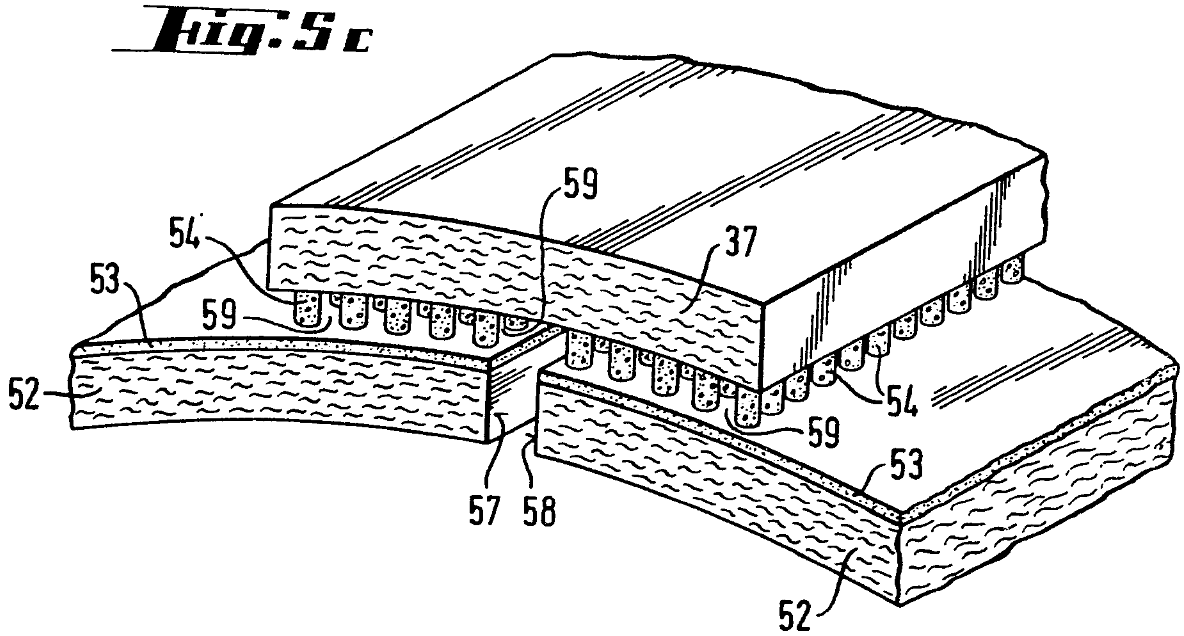
59
54
37
53
59
52
54
59
53
57
58
52

Fig. 5d

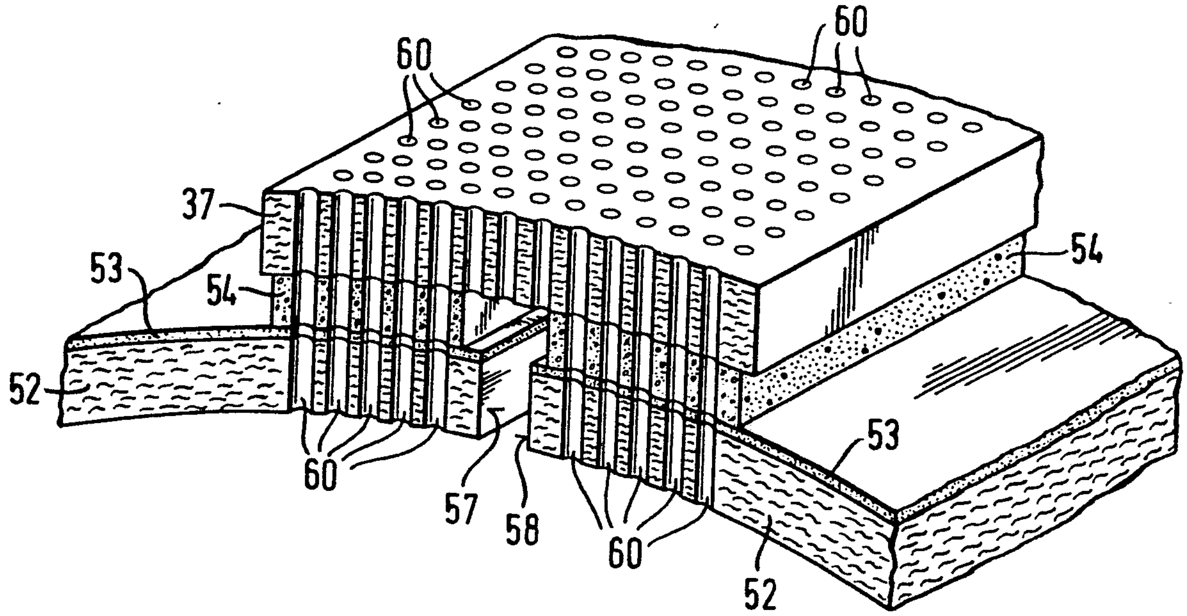
60
60
37
54
53
54
52
53
60
57
58
60
52

Fig. 6a

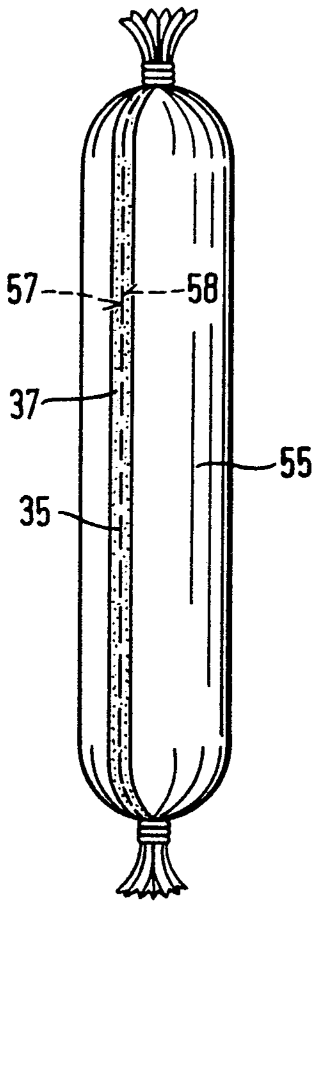


Fig. 6b

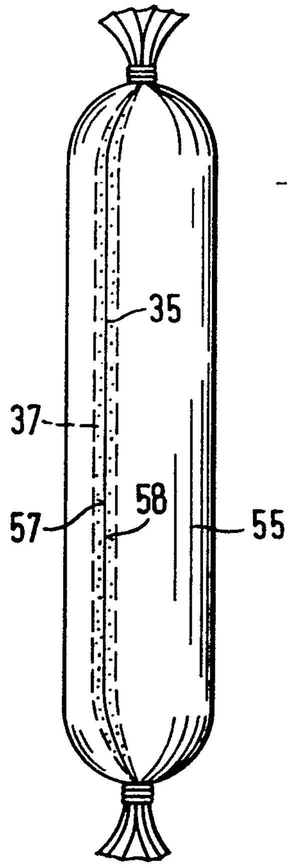

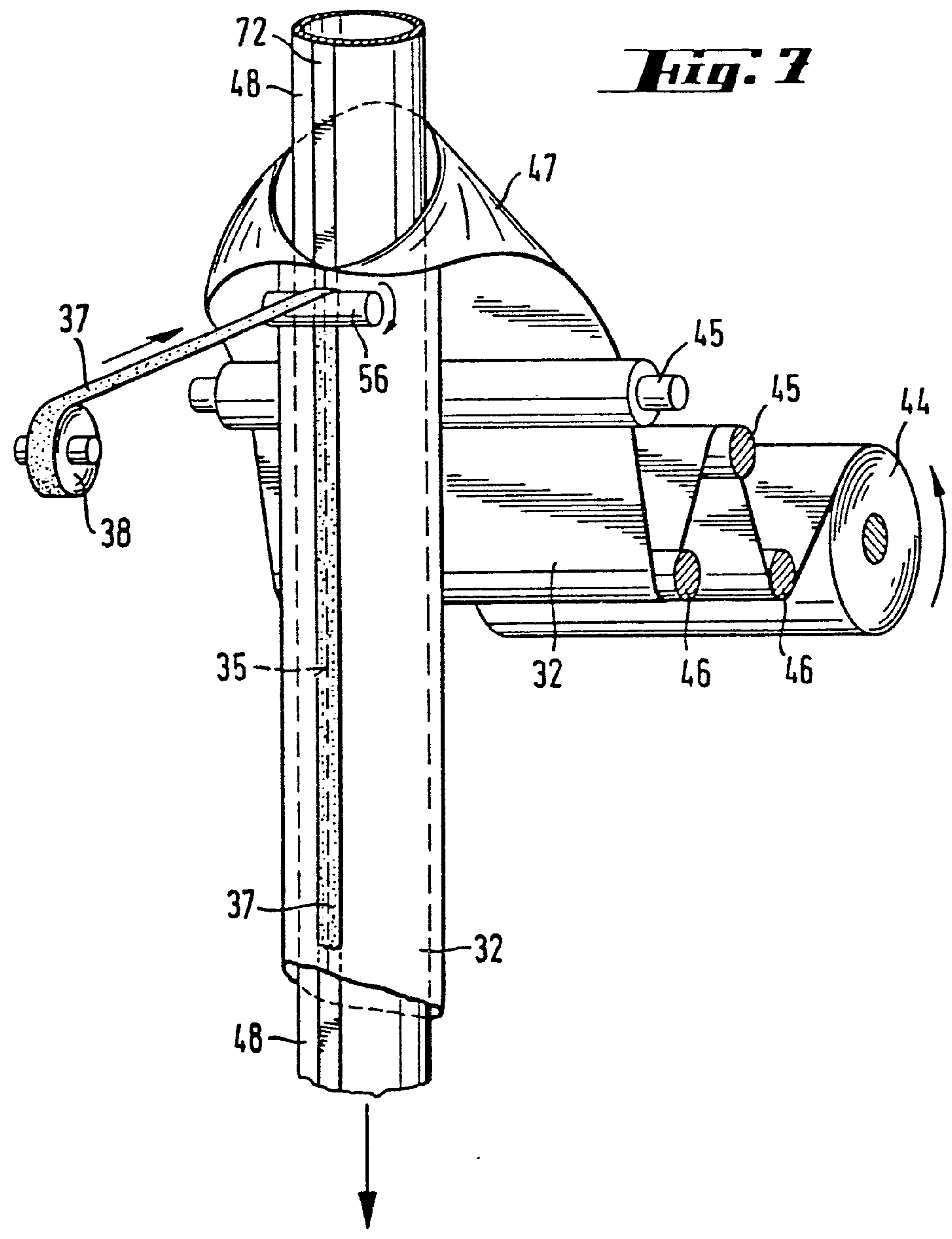


Fig. 7

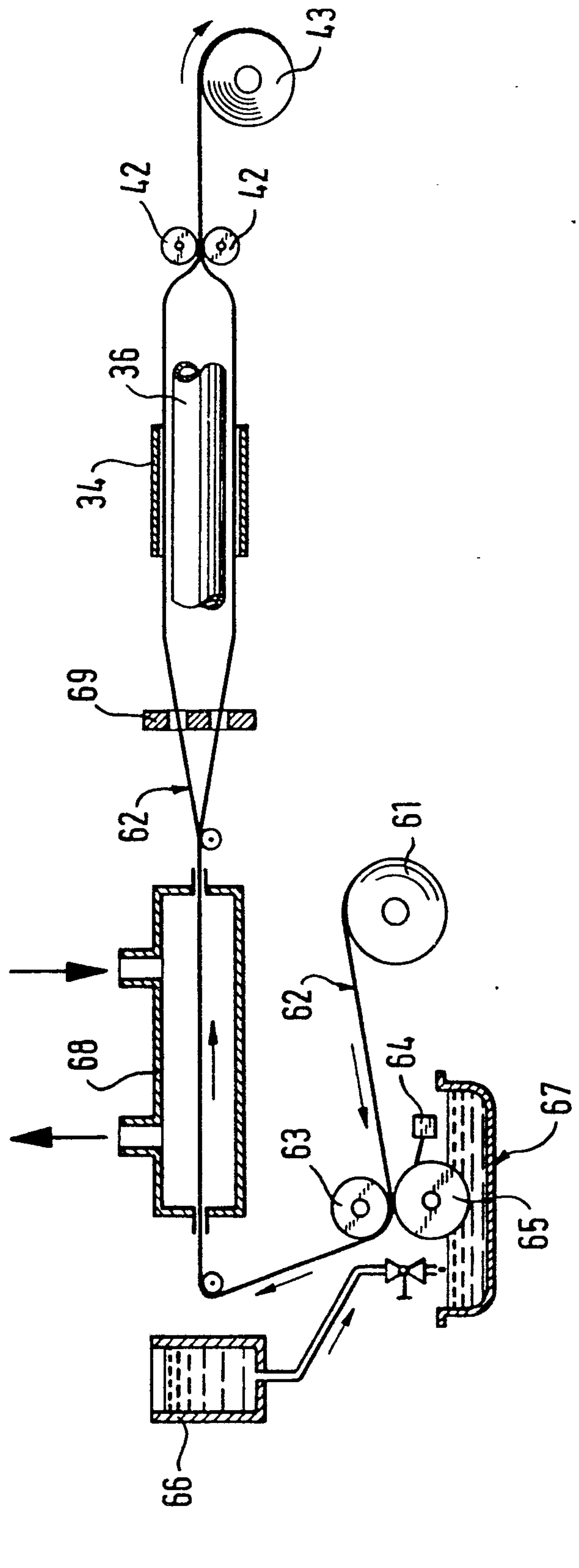


Fig. 8

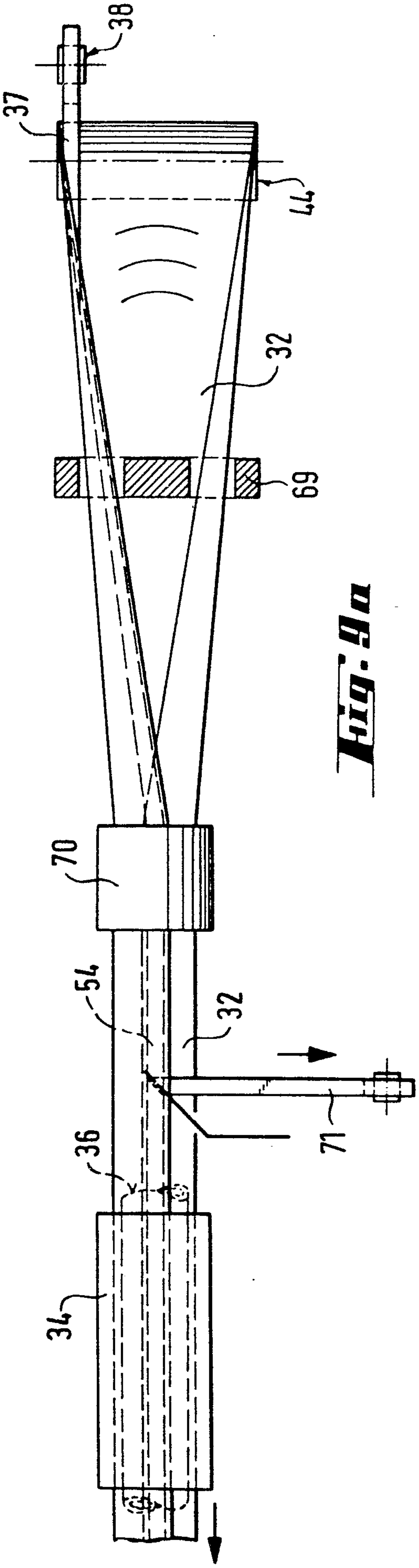


Fig. 9

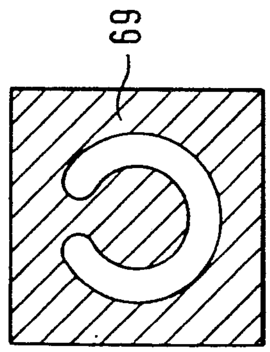


Fig. 9a